# EUROPEAN PATENT APPLICATION

(11) **EP 4 353 119 A1**
(43) Date of publication of application: **17.04.2024**
(21) Application number: 23199053.2
(22) Date of filing: 22.09.2023
(51) Int. Cl.: A45C 5/03, A45C 13/10, B29C 45/14, B29L 5/00, B29L 31/00

(54) **INJECTION MOLDED LUGGAGE CASE WITH INTEGRATED ZIPPER ASSEMBLY**

(30) Priority: 11.10.2022 EP 22200910
(71) Applicant: Samsonite IP Holdings S.à r.l., 1931 Luxembourg (LU)
(72) Inventor: MEERSSCHAERT, Reinhard, 9820 Merelbeke (BE)
(74) Representative: Lloyd, Robin Jonathan

(57) **Abstract**

A luggage case (102, 102') including an injection molded luggage shell (116, 118, 116', 118') including a zipper assembly (130, 130') attached to the luggage case (102, 102') during the injection molding of each shell (116, 118, 116', 118'). The injection molded shell (116, 118, 116', 118') having a rim portion (132, 134, 132', 134', 145) and having opposing inside (140, 140') and outside (142, 142') surfaces. An elongated zip member (144, 146, 144', 146') including a tape member (148, 148') having opposing first (154, 154') and second (156, 156') surfaces, and opposing inner (150, 150') and outer (152, 152') edges defining a width, with teeth (158, 158') positioned along the inner edge (150, 150'), and defining a length. One opposing surface (154, 156, 154', 156') of at least part of a first portion (160, 160') of the first tape member (148, 148') is in-mould-bonded to at least one opposing surface (140, 142, 140', 142') of the rim portion (132, 134, 132', 134', 145).

## Description

### BACKGROUND

The present disclosure relates to luggage cases with zip closures and zip arrangements for such cases. One aspect relates to injection molded luggage cases, and more specifically to attaching a zipper assembly to an injection molded luggage case during the injection molding process. One aspect of a luggage case is the zipper assembly, which includes a zipper mechanism. The zipper mechanism is central to opening and closing the luggage case; it impacts the appearance; and is a relatively expensive component affecting the cost of manufacture. The zipper mechanism is also subject to significant wear-and-tear during use and handling. There is a need for improved luggage cases with zip closures, and in particular injection molded luggage case with an integrally attached zipper assembly, and zipper assembly for use in luggage, that addresses one or all of the noted shortcomings.

The present disclosure also relates to forming zipper loops from a cut-length of a zipper (or zip) member (including a zipper tape and zipper teeth) for use in attaching a zipper assembly to an injection molded luggage case. Both zipper loops used in forming an injection molded luggage case benefit from having the same or similar number of teeth, or the resulting shell may be mal-formed. The current manners of attaching the ends of a zipper (or zip) member to form a zipper loop lack desired efficiency, precision and repeatability. There is a need for an improved attachment structure for precisely and repeatably connecting the ends of a zipper (or zip) member to form a zipper loop that addresses one or all of the noted shortcomings.

The present disclosure also relates to expansion zipper assembly. Typically the number of expandable and non-expandable luggage cases produced are predetermined based on forecasted demand estimates, because the manufacturing process for each style is distinctly different. This may result in an over, or under, production of either style, which may not satisfy the market demand and result in lost sales or extra costs for additional production. There is a need for an improved expansion zipper assembly that addresses one or all of the noted shortcomings, such as providing the flexibility to convert a luggage case from non-expandable to expandable after a luggage shell is formed and the primary zipper attached, which would allow the production of the desired style of luggage case to be more responsive to market demand.

### SUMMARY

In some examples, an injection molded luggage case includes an injection molded shell defining a rim portion having inside and outside surfaces, an elongated zip member including a tape member having opposing first and second surfaces, and opposing first and second edges, with teeth positioned along the second opposing edge. One opposing surface of at least part of a first portion of the tape member is in-mould-bonded to one of the inside or outside surfaces of the rim portion.

Additionally or alternatively, the other surface of the tape member is unaffixed to the rim portion.

Additionally or alternatively, the tape member is in-mould-bonded to the inside surface of the rim portion.

Additionally or alternatively, the in-mould-bonding is substantially continuous along the length of the tape member.

Additionally or alternatively, the first portion includes the first edge and a co-extending portion of a width of the tape member along the first edge.

Additionally or alternatively, the first portion includes between 20% and 70% of the width of the tape member.

In one example, the rim portion defines an edge of a pocket structure formed on the shell or the rim portion defines a periphery of the shell.

Additionally or alternatively, the zip member includes a second zipper tape extending from the tape member and having teeth positioned along a second edge.

Additionally or alternatively, the zip member includes an accessory zipper assembly extending from the first tape member.

Additionally or alternatively, the accessory zipper assembly is a liner zipper assembly or an expansion zipper assembly.

Additionally or alternatively, in-mould-bond includes any of cohesion, adhesion, thermal bonding, mechanical bonding or any combination.

Additionally or alternatively, a cover layer overlays at least part of the outer surface of the second portion of the tape member.

In other examples, and additionally or alternatively to that provided above, the injection molded shell may be made of a plastic mold material, and the tape member includes a first portion adjacent to the first edge of the tape member, and a second portion; the first portion of the tape member is predominately made of a first material that is compatible with and bonds to the plastic mold material.

Additionally or alternatively, the second portion of the tape member is predominately made of a second plastic material different to the first material.

Additionally or alternatively, the tape member is woven and includes warp yarns extending along a length of the tape member and weft yarns extending across a width of the tape member; and the first portion of the tape member includes weft yarns and first warp yarns.

Additionally or alternatively, the second portion extends along the second edge to which the teeth are attached and is bounded by the first portion; the second portion of the tape member includes the weft yarns, and second warp yarns made of a second plastic material different than the weft yarns, the second material not bonding well or at all with the plastic mold material.

Additionally or alternatively the second portion includes between 30% and 80% of the width of the tape member.

Additionally or alternatively, the first warp yarns constitute at least 40% of the warp yarns in the first portion.

Additionally or alternatively, the first warp yarns are made of polypropylene.

Additionally or alternatively, the second warp yarns constitute at least 40% of the warp yarns in the second portion.

Additionally or alternatively, the second warp yarns are made of a plastic material having a higher abrasion resistance than the first plastic material. Additionally or alternatively, the second warp yarns are made of polyester or nylon.

Additionally or alternatively, second warp yarns are made of the same plastic material as the teeth of the zip.

Additionally or alternatively, the first plastic material is a thermoplastic material.

In other examples, an injection molded luggage shell having a zip member includes a zip member including a tape member having first and second surfaces, and first and second edges, with teeth positioned along the second edge, a first portion adjacent to the first edge of the tape member, and a second portion adjacent the second edge of the tape member; and the first portion of the tape member is at least partially made of a first material that bonds to the molded shell to thereby integrally attach one surface of the first tape member to the shell during injection moulding.

Additionally or alternatively, a second portion of the tape member is predominately made of a second material that is different to the first material.

Additionally or alternatively, the tape member is woven and includes warp yarns extending along a length of the tape member and weft yarns extending across a width of the tape member; and the first portion of the tape member includes weft yarns and first warp yarns, the first set of warp yarns made of the first plastic material that is compatible with and bonds to the molded shell.

Additionally or alternatively, the second portion of the tape member to which the teeth are attached includes the weft yarns and second warp yarns, the second warp yarns made of a second plastic material different than the first plastic material, the second plastic material not being compatible with and not bonding to the plastic mold material.

Additionally or alternatively, the second portion includes between 30% and 80% of the width of the tape member.

Additionally or alternatively, the first warp yarns constitute at least 40% of the warp yarns in the first portion.

Additionally or alternatively, the second warp yarns constitute at least 40% of the warp yarns in the second portion.

Additionally or alternatively, the second warp yarns are made of a plastic material having a higher abrasion resistance than the first plastic material.

Additionally or alternatively, the second warp yarns are made of polyester or nylon.

Additionally or alternatively, the first warp yarns are made of polypropylene.

Additionally or alternatively, the teeth of the zip are made of the same plastic material as the second warp yarns.

In other examples, a method of attaching a zip member to a luggage shell formed by injection molding in a mold, includes the steps of positioning the zipper member on the mold with a first surface of the zipper member engaging the mold; and wherein upon injection molding, the mold material flows over a second surface of at least part of the first portion of the zip member to in-mould-bond with the shell, mold material does not flow over the at least part of the second portion of the second surface of the zip member, and the inner surface of the zip member is unaffixed to the shell.

Additionally or alternatively, the zip member is formed in a loop and positioned around a peripheral edge of the mold.

Additionally or alternatively, the zipper member loop is expanded to a first tension level when positioned around the peripheral edge of the mold component.

Additionally or alternatively, after completion of injection moulding the zipper member loop remains under residual tension at a second tension level less than the first tension level.

Additionally or alternatively, the mold includes a recess for receiving the zipper teeth during molding.

Additionally or alternatively, the peripheral edge defines an outward curve along all portions of the peripheral edge.

Additionally or alternatively, the zip member is formed of at least two different plastic materials.

Additionally or alternatively, the zip member is woven; and the first portion includes a first material that is compatible with and bonds to the mold material and the second portion includes a second material that is different to the first material.

Additionally or alternatively, the second material is more resistant to abrasion than the first material.

In another example, a method of in-mould-bonding a zip member to a luggage shell formed in an injection mold is described. The injection mold has an inner mold component defining a mold core and an outer mold component, together forming a mold cavity defining the shape of a luggage shell. The method includes the steps of positioning the zip member around a peripheral edge of the mold core; moving the outer mold component into position with the inner mold component to form the mold cavity leaving an outer surface of the first portion of the tape member exposed within the mold cavity; injecting mold material into the mold cavity and over the outer surface of the first portion of the tape member; solidifying the mold material to form a luggage shell and in-mould-bond with the outer surface of the first portion of the tape member; and removing the luggage shell from the injection mold.

Additionally or alternatively, the second portion may extend along the second edge to which the teeth are attached and is bounded by the first portion, the second portion of the tape member includes the weft yarns, and second warp yarns may be made of a second plastic material different than the weft yarns, the second material having better abrasive resistance characteristics than the first plastic material.

Additionally or alternatively, the second portion may underlie a zipper slider mounted on the zip member.

Additionally or alternatively, the outer surface of the first portion of the tape member is in-mould-bonded with the rim portion of the luggage shell.

Additionally or alternatively, the outer surface of the first portion of the tape member is in-mould-bonded continuously along its length to an inner surface of the rim portion of the luggage shell and the inner surface of the tape member is not bonded to the rim portion of the luggage shell.

Additionally or alternatively, the zip member includes zipper teeth, and the zipper teeth are positioned outside of the mold cavity.

Additionally or alternatively, the tape member is stretched to a first tension when positioned around the peripheral edge of the mold core.

Additionally or alternatively, the tape member remains stretched to a second tension after the luggage shell is formed and removed from the injection mold, the second tension less than the first tension.

Additionally or alternatively, the tape member is stretched up to approximately 110% or more of its length when positioned around the periphery of the mold core; and the tape member remains stretched up to between approximately 101% to 106% of its nominal length after the luggage shell is formed and removed from the injection mold.

An example of the invention described herein may relate to efficiently, precisely and repeatably attaching the opposing ends of the zipper loop so that each portion of the zipper loop has the intended number of zipper teeth for proper alignment and function.

An example of the invention described herein may relate to a modular expansion zipper assembly that may be implemented on a luggage case during production in one example, or alternatively after the shells have been formed and the primary zipper (or zip) members attached in another example.

In some examples, an injection molded luggage case includes an injection molded shell defining a rim portion having inside and outside surfaces, an elongated zip member including a tape member having opposing first and second surfaces, and opposing inner and outer edges defining a width, with teeth positioned along the second opposing edge, and defining a length. One opposing surface of at least part of a first portion of the tape member is in-mould-bonded to one of the inside or outside surfaces of the rim portion.

In some examples, the second opposing surface of at least part of a first portion of the tape member is in-mould-bonded to the inside surface of the rim portion.

In some examples, the first surface of the tape member is unaffixed to the rim portion.

In some examples, the tape member is in-mould-bonded to the inside surface of the rim portion.

In some examples, the in-mould-bonding is substantially continuous along a portion of the length of the tape member.

In some examples, the injection molded shell is made of a plastic mold material, the tape member includes the first portion adjacent to the outer edge of the tape member (148), and a second portion, and the first portion of the tape member is predominately made of a first material that is compatible with and in-mould-bonds to the plastic mold material.

In some examples, the tape member is woven.

In some examples, the tape member includes warp yarns extending along the length of the tape member and weft yarns extending across a width of the tape member and the first portion of the tape member includes weft yarns and first warp yarns including the first material.

In some examples, the outer edge defines a first thickness dimension along at least a portion of the tape member, the first thickness dimension being greater than the thickness dimension of the first portion adjacent the outer edge.

During molding, the greater thickness of the outer edge may prevent mold material from contacting the first surface. Mold material contacting the first surface may create a deformity in the rim portion.

In some examples, the first thickness dimension is defined by a bead.

In some examples, the outer edge is defined by a bead. In some examples, the outer edge is defined by a bead defining the first thickness dimension.

In some examples, the tape member includes a plurality of warp yarns extending along a length of the tape member and a plurality of weft yarns extending across a width of the tape member.

In some examples, the first portion of the tape member includes first weft yarns of the plurality of weft yarns and first warp yarns of the plurality of warp yarns and the bead is defined by at least one first warp yarn having a diameter greater than others of the first warp yarns.

In some examples, the tape member is woven.

In some examples, bead is predominately made of a same material as the injection molded shell.

In some examples, the injection molded shell is made of a plastic mold material, the first portion of the tape member is predominately made of a first material that is compatible with and in-mould-bonds to the plastic mold material, and the bead is predominately made of a the first material.

In some examples, each of the first warp yarns are made of the same material.

In some examples, the at least one first warp yarn is an outer-most first warp yarn in the first portion.

In some examples, the bead defines the boundary between the in-mould bonded outer surface of the first portion and the unbonded inner surface of the first portion.

In some examples, the mold material bonds only to the outer surface of the tape member.

In some examples, the tape member includes a fold to angle the bead relative to the second portion.

In some examples, the rim portion defines a ridge extending away from the inner surface, the ridge extending at least partially along the length of the rim portion, and the first portion may at least partially overlay and be bonded to the ridge.

In some examples, the ridge defines an apex and the outer edge is positioned on the ridge.

In some examples, the bead is positioned on or adjacent an apex of the ridge.

In some examples, the bead is positioned below the apex of the ridge.

In some examples, a groove is formed at the apex of the ridge, and the outer edge is received at least partially within the groove.

In some examples the groove is formed adjacent the apex of the ridge.

In some examples, the groove is formed at a location spaced away from the apex of the ridge, which in some examples may be below the ridge.

In some examples, the outer edge extends along the rim portion of the shell. In some examples, the outer edge extends substantially parallel to the rim portion of the shell.

In some examples, an accessory tape member is attached to the tape member. The accessory tape member may be useful for attaching a liner within the luggage shell.

In some examples, the accessory tape member includes accessory zipper teeth, the accessory zipper teeth narrower than zipper teeth of the tape member.

In some examples, the luggage shell is formed in a mold including a mold cavity defining an inner mold surface, the inner mold surface engaging the first surface of the tape member, and defining an outer mold surface, the outer surface engaging the second surface of the tape member, and wherein the inner mold surface and the second opposing edge of the first portion are arranged for mold material to flow to the outer edge, the outer edge diverting the mold material over the second surface of the tape member.

In some examples, the mold material bonds only to the second surface of the zip member.

In some examples, the tape member includes the bead, and the bead limits mold material from bonding to the first surface.

In some examples, the mold material is not positioned between the first surface of the tape member and the inner mold surface.

In some examples, a channel is formed in the inner mold surface, at least part of the second opposing edge of the first portion is received in the channel, wherein during injection molding the mold material flows into the channel to engage the outer edge and is diverted over at least part of the outer surface of the tape member.

In some examples, the bead is received in the channel, wherein upon injection molding mold material flows into the channel to engage the bead and is diverted over at least part of the second surface of the tape member.

In some examples, the inner mold surface is positioned along a lower peripheral edge of the mold core, and the channel is formed in the inner mold surface near the lower peripheral edge.

In some examples, the channel includes side walls arranged at different angles relative to the inner mold surface.

In some examples, the injection molded shell includes a first long side, and the elongated zip member extends along the first long side, the elongated zip member defining a first cutout positioned on the first long side.

In one example, the cut out allows a slider mechanism to be placed on the elongated zip member to engage a second elongated zip member to define a closure assembly.

In another example, an injection molded shell for a luggage case includes a first injection molded shell defining a first rim portion, the shell including a first long side, and a first zip member molded to the first rim portion and extending along the first long side, the zip member defining a first cutout positioned on the first long side.

In some examples, the first injection molded shell includes a first corner adjacent the first long side.

In some examples, the cutout is positioned adjacent the first corner.

In some examples, the luggage case includes a second injection molded shell defining a second rim portion, the second injection molded shell including a second long side and a second corner adjacent the second long side.

In some examples, the luggage case includes a second zip member molded to the second rim portion and extending along the second long side, the zip member defining a second cutout positioned adjacent the second corner.

In some examples, the second rim of the second injection molded shell is aligned with the first rim of the first injection molded shell for engagement of the first and second zip members to form a closure assembly.

In some examples, the first cutout and the second cutout are aligned to form the cutout area.

In some examples, the first zip member and the second zip member include corresponding zipper teeth along corresponding edges.

In some examples, at least one slider is positioned in the cutout area to mount on the closure assembly to cause engagement of the first zip member and the second zip member to define a hinge portion.

In some examples, the benefit of this arrangement include that the mounting of the slider and defining the hinge portion is simplified.

In some examples, the benefits of this arrangement include that the hinge portion 128' is formed with a continuously connected closure assembly, which assists in a more robust hinge structure defined by the hinge portion.

In some examples, the hinge portion may allow rotation of the first and second shells about the hinge portion to selectively access the internal volume.

In some examples, an interference feature is secured across the closure assembly.

In some examples, the interference feature may also further assist in maintaining the engagement of the corresponding zipper teeth through the hinge portion.

In some examples, the interference feature limits movement of the slider through the hinge portion to prevent disengagement of the corresponding zipper teeth at the hinge portion.

In some examples, the first zip member and the second zip member define corresponding first and second ends at the cutout area.

In some examples, a first end clip couples the first and second zip member at the first end.

In some examples, a second end clip couples the first and second zip member at the second end.

Additional embodiments and/or features are set forth in part in the description that follows, and will become apparent to those skilled in the art upon examination of the specification or may be learned by the practice of the disclosed subject matter. A further understanding of the nature and advantages of the present disclosure may be realized by reference to the remaining portions of the specification and the drawings, which forms a part of this disclosure. One of skill in the art will understand that each of the various aspects and features of the disclosure may advantageously be used separately in some instances, or in combination with other aspects and features of the disclosure in other instances.

### BRIEF DESCRIPTION OF THE DRAWINGS

The description will be more fully understood with reference to the following figures in which components are not drawn to scale, which are presented as various examples of the present disclosure and should not be construed as a complete recitation of the scope of the disclosure, characterized in that:
Fig. 1A is an isometric view of a luggage article in a closed configuration including a zipper assembly according to some examples of the present disclosure;
Fig. 1B is an isometric view of a front shell of a luggage article including a pocket structure formed in the front panel, and including a zipper assembly according to some examples of the present disclosure.
Fig. 1C is an enlarged view of the portion encircled by 1C-1C of Fig. 1A.
Fig. 2A is a section view taken along line 2A-2A of Fig. 1C.
Fig. 2B is a section view taken along line 2B-2B of Fig. 1B.
Fig. 3A is a partial top plan view of Fig. 2A.
Fig. 3B is an enlarged top plan view of the portion encircled by 3B-3B of Fig. 3A.
Fig. 4A is a partial representative section view of an accessory zipper in the form of a liner zipper, taken along line 4A-4A of Fig. 1C.
Fig. 4B is a representative section view of an accessory zipper in the form of an integrated expansion zipper, taken along line 4B-4B of Fig. 1C.
Fig. 4C is a representative section view of zipper in the form of a modular expansion zipper assembly, taken along line 4C-4C of Fig. 1C.
Fig. 4D is a representative section view of the modular expansion zipper assembly in Fig. 4C with the expansion zippers detached from the first and second primary zippers.
Fig. 4E is a partial representative section view of a zipper in the form of a cover overlying part of a zipper, taken along line 4E-4E of Fig. 1C.
Fig. 5A is a perspective view of an example of mold components for injection molding a luggage shell, with an outer mold component separated from the inner mold component, and a zipper loop.
Fig. 5B is a perspective view of an example of mold components of Fig. 5A, with the zipper loop positioned around a top portion of the mold core.
Fig. 5C is a perspective view of an example of mold components of Fig. 5B, with the zipper loop positioned around a peripheral edge of the mold core.
Fig. 5D is a perspective view of an example of mold components of Fig. 5C, with the zipper loop extending around and engaging a peripheral edge of the mold core and the sliders moved inwardly on the slider frame.
Fig. 5E is a perspective view of an example of mold components of Fig. 5D, with an outer portion of the mold components moving downwardly to close the mold.
Fig. 5F is a perspective view of an example of mold components of Fig. 5E, with an outer portion of the mold components engaging the inner components to close the mold.
Fig. 5G is a perspective view of an example of the mold components of Figs. 5A-5F with an upper component removed to open the mold, and an injection molded luggage shell removed from the mold core, and the zipper loop being bonded onto the injection molded luggage shell.
Fig. 6A is a partial section view taken along line 6A-6A of Fig. 5F.
Fig. 6B is a partial section view taken along line 6B-6B of Fig. 5F.
Fig. 7 is a partial section view similar to Fig. 6A showing the injection molded shell formed with the zipper loop bonded to the molded shell.
Fig. 8 is a perspective view of a zipper loop.
Fig. 9 is an enlarged view of the opposing ends of the zipper loop of Fig. 8.
Fig. 10 is an enlarged view similar to Fig. 9 showing joining members engaging the opposing ends of the zipper loop together.
Fig. 11 is an enlarged view similar to Fig. 10, showing end clips positioned on the ends of the zipper.
Fig. 12A is a partial schematic view of an example zipper assembly of the present application.
FIG. 12B is a cross section of the zipper assembly of FIG. 12A taken along line 12B-12B.
Fig. 13 is a partial section view, similar to Fig. 6A, of an example of the mould components with the zipper loop of Fig. 12A positioned between the mould components and prior to the injection of the injection moulding material.
Fig. 14 is a partial section view similar to Fig. 13 showing the injection moulded shell formed with the zipper loop of FIG. 12A bonded to the injection moulded shell.
FIG. 15 is a partial section view, similar to Fig. 6B, of an example of the mould components with the zipper loop of Fig. 12A positioned between the mould components and prior to the injection of the injection moulding material and including an accessory zipper assembly.
Fig. 16A is a section view of the example zipper assembly bonded to a pair of shells.
Fig. 16B is an enlarged view of 16A taken along line 16B-16B.
FIG. 17A shows the first and second shells in an exploded view, each having zip tape integrally formed thereon, and each showing a cut-out near an end of a hinge portion.
FIG. 17B shows the first and second shells with the respective zip tapes engaged at least through the hinge portion, and shows the sliders having been mounted through the cut-out.

### DETAILED DESCRIPTION

An improved injection molded luggage case as described herein may include all or part of a zipper assembly attached to at least one shell of the luggage case during the injection molding step forming the luggage shell. Attaching the zipper assembly during the injection molding step can simplify construction of the luggage case by eliminating the step of attaching the zipper assembly after the at least one luggage shell is formed. This reduces the complexity and number of operations associated with assembling a luggage case. The rim to which the zipper assembly is attached may be a rim that forms an opening to a compartment of the luggage case, such as the primary compartment, or may be a pocket formed on the luggage shell. The zipper assembly may be attached by in-mould-bonding along one edge to a rim of the luggage shell, and may be attached to another structural component of a luggage article that is not an injection molded luggage shell, such as a soft-side constructed luggage piece along the opposing edge.

Attaching a zipper assembly during the injection molding of a luggage shell may be suitable for use on many different types of luggage articles that include at least one portion, such as a shell, that is injection molded. The description of the improved injection molded luggage case with an integrated zipper assembly is described herein with respect to a hard sided luggage case having a first shell and a second shell by way of example only, although the invention is particularly suitable and beneficial for use on such hardside luggage. The in-mould-attachment of a zipper assembly as described herein may be to one shell, where the other component may be soft-sided structure, such as a hybrid case, or to both shells of a luggage case.

Also described herein, separate from or in combination with other the other disclosures, is an improved zipper loop for attaching to an injection molded luggage shell during the injection molding process. A zipper loop is formed from a cut-length of a zipper assembly or a zipper (or zip) member portion of a zipper assembly. The opposing ends of the cut-length of the zipper assembly may be attached together by overmolding a joining member onto the opposing ends. The overmoulded joining member allows precise and secure positioning of the opposing ends to help insure the zipper loop is properly sized and may withstand the tension imparted during the injection molding process. The overmolded joining member may be used on zipper assemblies intended for non-expandable luggage shells, as well as expandable zipper assemblies.

Also described herein, separate from or in combination with other the other disclosures, is an expansion zipper assembly that is modular and may be applied to a luggage case after the shells are formed and the primary zipper assembly is attached to the shells, such as by bonding a primary zipper (or zip) member to each shell when the shell is formed by injection molding, as described herein. The modular nature of the expansion zipper assembly allows luggage shells styled as non-expandable to be converted to expandable luggage cases.

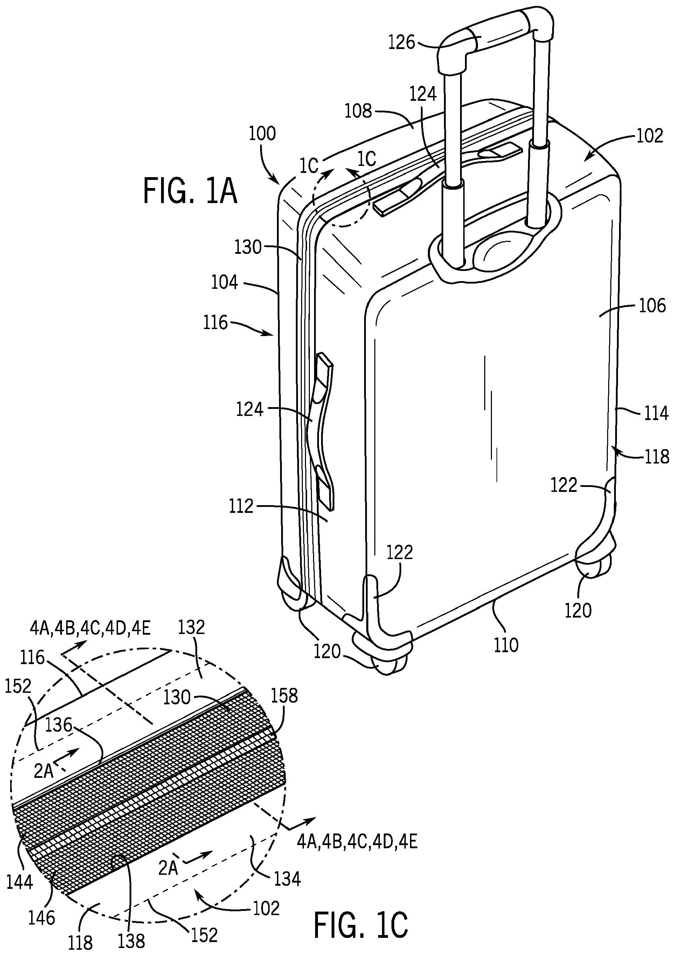

Fig. 1A is an isometric view of a luggage article in a closed configuration according to some examples of the present disclosure. A luggage article 100 according to an embodiment of the present disclosure includes a luggage case 102 formed from a plurality of walls or panels defining an internal primary compartment and storage volume in which to carry a user's belongings. As shown, the luggage article 100 includes a front panel 104, opposing a rear panel 106, a top panel 108, opposing a bottom panel 110, and a left panel 112 opposing a right panel 114 that collectively define a pair of opposing shells 116, 118 and the outer structure of the luggage case 102. As shown, a plurality of wheel assemblies 120, which may be caster-type wheel assemblies, may be coupled to at least the bottom panel 110, such as at the lower corner regions 122.

The luggage article 100 may also include one or more carry handles 124, typically on the top panel 108 and one of the side panels, such as 112. The luggage article 100 may also include an extendable or telescopic tow handle 126 attached to at least one panel of the luggage case 102, such as to the rear panel 106.

With continued reference to Fig. 1A, the luggage case 102 in this example comprises two shells 116, 118 secured by a zipper assembly 130, for example a primary zipper assembly 130 (as referred to when used to selectively couple the shells 116, 118), extending across all or portions of at least the top panel 108, left panel 112, right panel 114 and bottom panel 110. The primary zipper assembly 130, or portions thereof, may be attached to a rim portion, such as a peripheral rim, formed on each shell during the injection molding process for forming the shell. A hinge structure (not shown) may be formed on the right panel 114 such that the two shells of the luggage case 102 may rotate about the hinge to access the interior volume of the luggage case 102. The shells each may define an inner surface and an outer surface, and may be formed from materials used to construct injection molded hard-sided or rigid luggage cases, such as a plastic material, including for example polypropylene, polycarbonate, polyethylene, or other thermoplastic materials. The material used to form the shells by injection molding may be referred to herein as mold material(s), plastic mold material(s), and/or injection mold material(s).

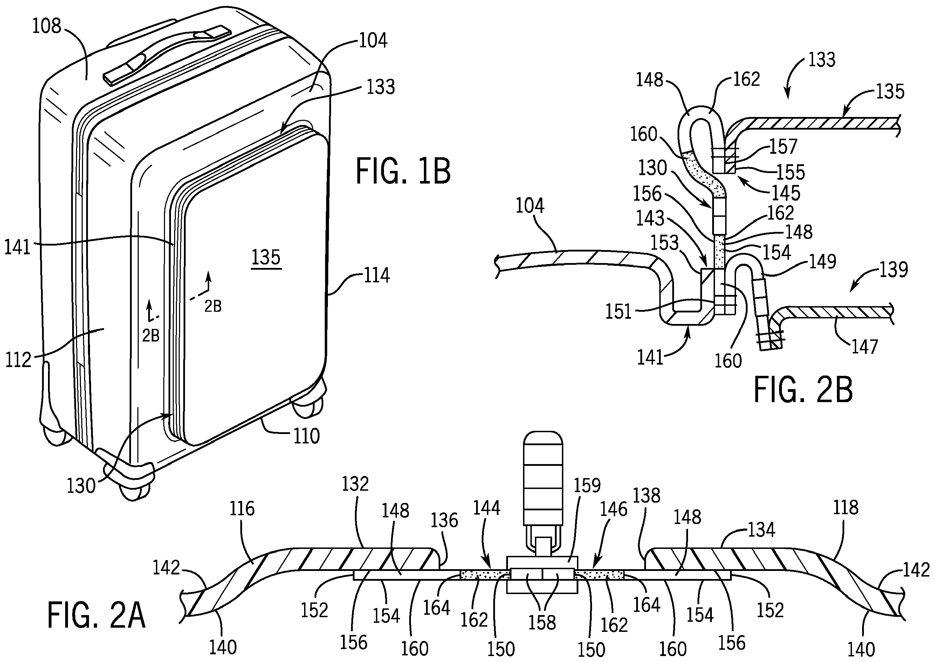

Fig. 1B shows a luggage panel, such as for example the front panel 104 of the front shell 116, including a pocket structure 133 defining a compartment. In other examples the pocket structure 133 may be positioned on the rear shell 118, and/or on any of the panels of either luggage shell. The pocket structure includes a compartment in the form of a receptacle 139 (see Fig. 2B) formed in the front panel 104, with the edge 141 of receptacle 139 defined by a rim portion 143 (see Fig. 2B). The receptacle 139 may be a recess having a base wall 147 and side walls. The recess may be formed in the front panel 104, or may, as shown herein, be a soft-sided, collapsible member attached around the rim portion 143 of the edge 141. A lid 135, in this case shown as made of a hard sided material, may be positioned over the receptacle 139, and defines a rim portion 145 (see Fig. 2B) extending all or part of the way around the periphery of the lid 135. The rim portion 145 of the lid 135 may be selectively secured to the front panel 104 by a zipper assembly 130, such as pocket zipper assembly 130 (as referred to when used to selectively couple the lid 135 of the pocket to the luggage panel 104). The lid 135 may be made of soft sided material or may be made of hard sided material. The pocket 133 may include a hinge structure to allow the lid 135 to move from covering the pocket 133 to opening the pocket using the zipper assembly 130. The hinge may be located between a bottom edge of the pocket and a lower portion of the front panel 104, near the bottom panel 110. The pocket 133 may include a gusset (not shown) attached between the lid 135 and the edge 141 to limit the extent to which the lid 135 may open.

With continuing reference to Fig. 1B and Fig. 2B, the zipper assembly 130, or portions thereof, may be attached to the rim portion 143 of the recess 139 during the injection molding process for forming the front shell 116. Where the lid 135 is a hard sided material formed by injection molding, the zipper assembly 130, or portions thereof, may be attached to the rim portion 145 of the lid 135 during the injection molding process for forming the lid 135.

Fig. 1C and Fig. 2A show an enlarged portion of one example of the luggage case 102 of the present invention, where the rim portion 132 of the first shell 116 and the rim portion 134 of the second shell 118 are secured together by the primary zipper assembly 130 attached during the injection molding of the first and second shells 116, 118. Each rim portion 132, 134 defines a peripheral edge 136, 138 and opposing inside (or inner) 140 and outside (or outer) 142 surfaces. The thickness of the shell 116, 118 between the inner surface 140 and the outer surface 142 may define the nominal thickness of the shell 116, 118. The primary zipper assembly 130 may include a first primary zipper (or zip) member 144 and a second primary zipper (or zip) member 146. The primary zip members 144, 146 each include a respective elongated tape member 148 having opposing inner 150 and outer 152 edges defining a width, and also have opposing inner 154 and outer surfaces 156. Zipper teeth 158 extend along one opposing edge of each tape member 148, such as the inner edge 150. Zipper teeth 158 may include individual teeth elements (plastic or metal), or coil structures, and are herein referred to generally as "zipper teeth". The zipper teeth 158 may be configured on the primary zipper assembly 130 and/or on expansion zipper assembly 184 as visible zipper teeth or may be configured as hidden zipper teeth. For example, the zipper teeth 158 may be located at or under a seam of tape member 148. The first and second primary zip members 144 and 146, and their respective tape members 148 and zipper teeth 158 generally include the same structural features and function. Throughout, only one zip member and subcomponents may be described, with the understanding that the other zip member is symmetric and substantially identical unless otherwise noted.

As shown in Fig. 2A, the zipper teeth 158 are releasably secured together, such as by a slider 159. Each of the first 144 and second 146 primary zip members may be bonded by injection moulding to the rim portion 132, 134 of the respective shell 116, 118. The bonding occurs during the injection molding formation of the shell, and is referred here throughout as in-mould-bonded or variants. In one example, as shown in Fig. 2A, each of the first 144 and second 146 primary zip member may be in-mould-bonded to the inside surface 140 of the respective rim portion 132, 134. In one example, all or a part of the outer surface 156 of the first and second tape members 148 may be in-mould-bonded to the inside surface 140 of the rim. In one example, all or part of the inner surface 154 of the tape member 148 may not be directly bonded to or attached with the respective rim portion 132, 134.

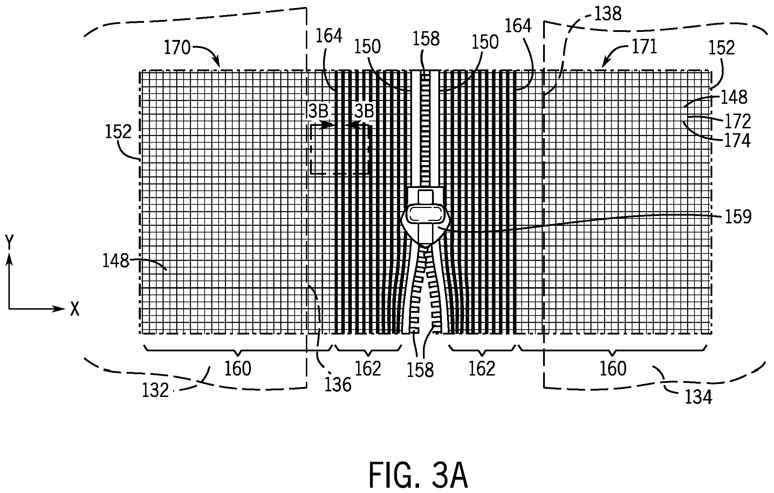

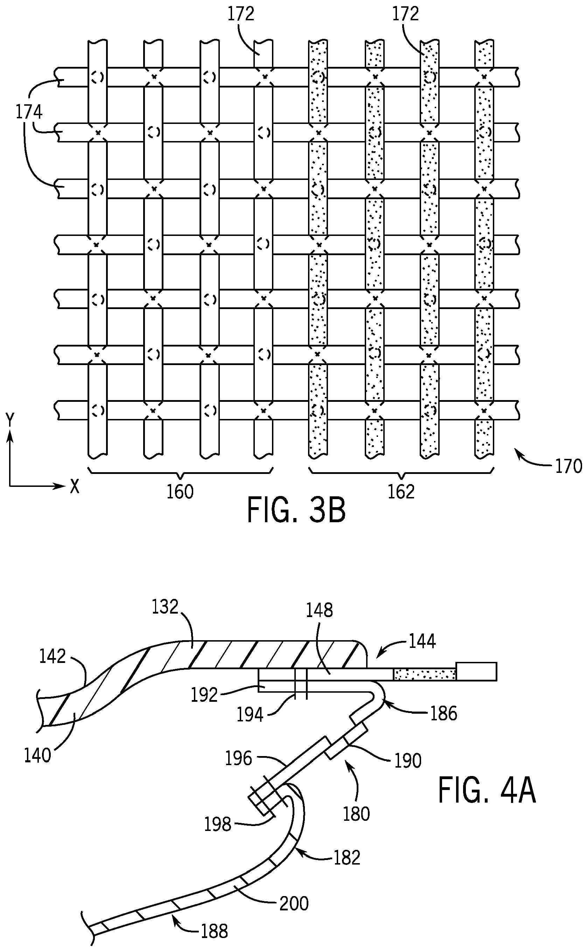

As shown in Fig. 2A and Fig. 3A (with the rims 132, 134 shown in dash for clarity), the tape member 148 of the zipper assembly 130 defines a first portion 160 and a second portion 162 across the width between the inner 150 and outer 152 edges. The first and second portions may extend along the entire length, or at least a part of the length, of the tape member. The first portion 160 of the tape member 148 is made of a first material or combination of materials (collectively the "first material") that allow in-mould-bonding to the rim portion 132, 134 of the luggage shell 116, 118 during the injection molding process. The second portion 162 of the tape member 148 is made of second material or combination of materials (collectively the "second material") that is selected for its resistance to abrasion, such as the abrasion caused by a zipper slider 159 moving along the second portion 162 of the tape member 148. In some examples the second material, separately or in addition, may not facilitate in-mould-bonding to the respective rim portion 132, 134 during the injection molding process. The second material may include material types in common with the first material, but includes other material types to make it sufficiently different than the first material such that the second material has abrasion resistance characteristics enhanced relative to the first material in the first portion 160. As a result, the rim may in-mould-bond to the first portion of the tape member, and the second portion of the tape member may withstand the wear and tear of the abrasion caused by the frictional contact of the slider moving along the second portion of the tape member. The second material may not in-mould-bond, or may only partially bond, with the second portion of the tape member. In one example, the first material making up the first portion may include polypropylene, and the second material making up the second portion may include polyester. In another example, the first material making up the first portion may include polypropylene and the second material making up the second portion may include polyester and polypropylene. This is described in more details below with respect to Fig. 3A, and Fig. 3B. The other tape member 148 of the zipper assembly 130 may be identically constructed with the same or similar features as described above.

In the example shown in Fig. 2A, the first portion 160 may extend from the outer edge 152, and across at least part of the width of the tape member 148. The second portion 162 may extend from the inner edge 150, and across at least part of the width of the tape member 148. The second portion 162 may include the zipper teeth 158. The first portion 160 and the second portion 162 may abut one another, such as at line 164.

The primary zip member 144 or the secondary zip member 146 may have a total width of approximately 15-20 mm wide. For example, from the zipper teeth 158 to the outer edge 152 may in one example be 18 mm. In one example, the second portion 162 may be sufficiently wide to encompass the region contacted by the slider as it moves along the tape member 148 of the zipper assembly, and the width of the first portion encompasses the balance of the width of the tape member. In one example, where the tape member is approximately 10 mm wide, the first portion may be 7 mm wide and the second portion may be 2 mm wide. In another example, another portion or portions, such as a third portion, may be defined between the first 160 and second portions 162. In another example, the first portion 160 may extend across the entire width of the tape member 148, a majority (greater than 50% of the width of the tape member 148, or a minority (less than 50%) of the width of the tape member. More particularly, the first portion may extend across up to and including 10%, up to and including 20%, up to and including 30%, up to and including 40%, up to and including 50%, up to and including 60%, up to and including 70%, up to and including 80%, or up to and including 90% of the width of the tape member. In one example, the second portion 162 may be defined as the portion of the width of the tape member 148 not making up the first portion 160. In another example, the width of the second portion 162 extend sufficiently to include the portion of the tape member 148 contacted by the slider as it moves along the tape member to engage and disengage the zipper assembly. For instance, the width of the second portion 162 may be equal to or less than half of the width of the portion of the slider that engages the tape member 148. In one example the width of the first portion 160 is the same as or greater than the amount the rim of the luggage shell overlaps the tape member 148. This amount of overlap facilitates recycling the luggage shell together with the first portion of the tape member 148. Because the second portion 162 of the tape member 148 may include second material different than the first material used in the first portion, the second portion 162 should be removed prior to recycling.

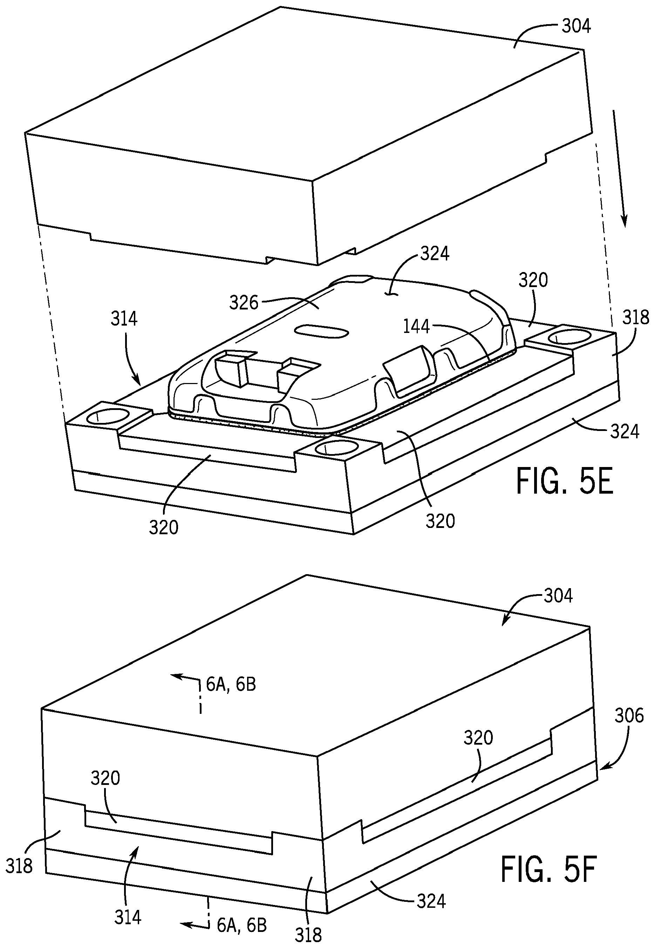

As shown in Fig. 2A, in one example, at least part of one side of the tape member 148 is in-mould-bonded to the inner, or inside, surface 140 of the rim portion 132, where the rim portion 132 overlays the tape member 148. The other side of the tape member 148 may not be in-mould-bonded to the rim portion 132. In this example, the one side that is in-mould-bonded is the outer surface 156 of the tape member 148. In another example, at least part of the outer surface 156 of the tape member 148 is in-mould-bonded to the inside surface 140 of the respective rim portion 132, 134, where the rim portion 132 overlays at least the first portion 160 of the tape member 148. In some examples, such as where the rim overlays only the first portion 160, the in-mould-bond is created between the outer surface 156 of the tape member and the inside surface 140 of the respective rim portion 132, 134 where the rim overlays the tape member. In some examples, such as in Fig. 5E, where the rim portion 132 overlays the first portion 160 and at least part of the second portion 162, the in-mould-bond is created between the outer surface 156 of the first portion 160 of the tape member and the portion of the inner surface 140 of the rim portion 132 where the rim portion 132 overlays the first portion 160 of the tape member 148. Continuing to refer to Fig. 5E, an in-mould-bond may be not formed where the inner surface 140 of the rim portion 132 overlays the outer surface 156 of the second portion 132 of the tape member 148. In another example, the inner surface 154 of the tape member 148 may be in-mould-bonded to the outside surface 142 of the respective rim portion 132, 134 of the luggage shell 116.

Fig. 2B is a partial cross section of the rim portion 143 secured to the rim portion 145 of the lid 135 by the zipper assembly 130. The tape member 148 shown in Fig. 2B may include the same or similar structure and features as described with respect to Figs. 2A, 3A and as described elsewhere herein. The zipper assembly 130 may be in-mould-bonded to the rim portion 143 of the shell during the injection moulding of the shell 116. The rim portion 143 may define inside 151 and outside 153 surfaces. As shown in Fig. 2B, in one example, at least part of one side of the tape member 148 is in-mould-bonded to the inner, or inside, surface 151 of the rim portion 143, where the rim portion 143 overlays the tape member 148. In this example, the one side that is in-mould-bonded is the outer surface 156 of the tape member 148. In another example, at least part of the outer surface 156 of the tape member 148 is in-mould-bonded to the inside surface 151 of the respective rim portion 143, where the rim portion 143 overlays at least the first portion 160 of the tape member 148. In some examples, such as where the rim 143 overlays only the first portion 160, the in-mould-bond is created between the outer surface 156 of the tape member 148 and the inside surface 151 of the respective rim portion 143 where the rim overlays the tape member 148. In another example, the inner surface 154 of the tape member 148 may be in-mould-bonded to the outside surface 153 of the respective rim portion 143. As shown, the base 147 of the recess may be secured to the rim 143 by zipper 149. The zipper 149 may be an auxiliary zipper, as described herein, secured to the zipper assembly 130 prior to the injection molding of the shell 116, 118. When the zipper assembly 130 is mould bonded to the shell 116, 118, the zipper 149 is also attached to the shell 116, 118 as an auxiliary zipper. The zipper 149 may be attached to zipper assembly 130 by stitching as shown, or other attachment means.

With continuing reference to Fig. 2B, where the lid 135 is formed of injection molded material, the lid zipper assembly 130 may be in-mould-bonded to the rim portion 145 of the lid 135 during the moulding of the lid 135. The rim portion 145 may define inside 155 and outside 157 surfaces. As shown in Fig. 2B, in one example, at least part of one side of the tape member 148 is in-mould-bonded to the inner, or inside, surface 155 of the rim portion 145, where the rim portion 145 overlays the tape member 148. The other side of the tape member 148 may not be in-mould-bonded to the rim portion 132. In this example, the one side that is in-mould-bonded to the inside surface 155 of the rim 145 is the outer surface 156 of the tape member 148. In another example, where the lid is formed of a soft-sided material structure or a hard sided material (including an injection molded material), the lid 135 may be stitched as shown in Fig. 2B or otherwise attached to one side of the lid zipper assembly 130, such as by an adhesive.

Referring to Fig. 3A and Fig. 3B, the tape member 148 may include at least two different materials, such as plastic materials. The tape member 148 may be a fabric made of woven or knitted yarns, the yarns being made of man-made or natural materials, such as plastic, including thermoplastic or thermo-set plastic. In the example show in Fig. 3A and Fig. 3B, the woven yarns 170 include warp yarns 172 and weft yarns 174, and the warp and weft yarns may be made of the same (e.g. in the first portion 160) or different plastic material from one another (e.g. in the second portion 162). In one example, and as described herein, warp yarns 172 extend in the direction of the length of the tape members (Y). In one example the warp yarns 172 extend substantially parallel to the edge of the rim portion of the luggage shell(s). In some examples, weft yarns 174 extend across the width of the tape members (X), which in one example is generally normal to or at right angles with the edge of the rim portion of the luggage shell(s), as shown in Fig. 3A and Fig. 3B. In general as best shown in Fig. 3B, for a woven fabric, warp yarns 172 extend alongside one another and are connected together by the weft yarns passing between the warp yarns in a pattern. The example weave pattern shown in Fig. 3A and Fig. 3B is a plain weave, with the weft yarn 174 alternating above and below adjacent warp yarns 172. In many examples of weave patterns, the warp yarns 172 may generally each be different from one another, while the weft yarns 174 may be a single yarn.

Continuing to refer to Fig. 3A and Fig. 3B, the first portion 160 of the tape member 148 is defined by the warp 172 and weft 174 yarns being made of a first material. The second portion 162 of the tape member 148 may be defined, in one example, by the warp yarns 172 being made of a second material different than the first material, and the weft yarns 174 being made of the first material.

In one example, the first portion 160 is made of warp yarn 172 and weft yarns 174 of a first material, which in-mould-bonds with the inside surface 140 of the rim portion 132, 134 formed in the injection molding process. For example, the first material may be the same as or similar to the injection molding material used to form the shells, in which case the materials are compatible with each other and a bond may be formed between them. The material used, for example, to injection mold the shell may be polypropylene, polyethylene or mixtures thereof, or polyamide, polyethylene terephthalate (PET), or ABS. Additives may include impact modifiers and UV stabilizers, and/or pigment. The pigment content may generally range from 1% to 6% by weight. The first material may include all or some of the same materials as the mold materials used to form the luggage shell, and for example may be polypropylene. The first material may not include polypropylene, but instead materials that may bond to the mold material used to form the luggage shell, such as for example an alloy of polypropylene, or may also include PE, LDPE, or HDPE.

The second material may be selected to have different characteristics than the first material. For example, the second material included in the second portion 162 may have a different characteristic in that it may have an enhanced resistance to abrasion relative to the first material. The abrasion-resistant characteristics may allow the second portion 162 to withstand the wear and tear of repeated frictional sliding contact with the slider 159 as it moves along the zipper teeth 158 to open and close the primary zipper assembly 130. In another example, separately or in combination with the abrasive resistance, the second material may not bond to the material used to form the shell or shells by injection molding. In one example, the second portion extends along the second edge to which the teeth are attached and is bounded by the first portion. The second portion of the tape member includes the weft yarns, and second warp yarns made of a second plastic material different than the weft yarns, the second material having better abrasive resistance characteristics than the first plastic material used in the weft yarns. Additionally or alternatively, the second portion may underlie a zipper slider mounted on the zip member.

Another optional characteristic, either separately or in combination with the other characteristics, of the second material may be that it is more water resistant, such as being less water absorptive, than the first material. In one example, the second portion 162 may include weft yarns that are the same as the first material, such as for example polypropylene. The warp yarns in the second portion 162 may be another material, such as for example polyester or nylon. The polyester or nylon material has a higher abrasion resistance than the first material and in combination with the weft yarns is more resistant to abrasion than the first material. Additionally or separately, this example may not in-mould-bond with the first material used in the injection molding process to form the luggage shell.

Generally, as described herein and throughout, in some examples the zipper teeth 158 may be made of polyacetal (POM) (for the injection molded zipper teeth) or nylon or polyester (for the coil zipper teeth).

In another example of the tape member, each tape member 148 may be an extruded strip or strips of at least two different thermoplastic material or materials. A first portion 160 of each tape member 148 may be adjacent the first edge of the tape member, and a second portion 162 adjacent a second edge of the tape member. The first portion may be made of a first material, and the second portion made be made of a second material.

In Fig. 3B, an enlarged view of the plain weave pattern as shown in Fig. 3A, including the first portion 160 and the second portion 162. In this example, for the plain weave pattern, there are eight (8) warp yarns 172 and seven (7) weft yarns 174. In the plain weave pattern as shown, generally, from top left of Fig. 3B, the weft yarn alternately extends under a warp yarn and then over the adj acent warp yarn in one row, and in the next row the weft yarn 174 reverses and alternately extends under than then over the adjacent warp yarns. Repeating this course results in the plain weave pattern as shown, with portions of the warp and weft yarns 172, 174 being exposed in approximately equal numbers on the outer surface 156 of the tape member 148 because of the over/under alternating weaving pattern. In the example shown in Fig. 3B, each intersection is marked with an "o" or an "x". The "o" represents the warp 172 being exposed at the outer surface 156, and the "x" represents the weft 174 being exposed at the outer surface 156.

In the molding process, the injection molding material flows over the surface of the tape member 148 that is exposed in the mold cavity (as described in further detail below), and contacts the exposed portions (including the intersection areas marked "o" or "x") of the warp and weft yarns 172, 174, and flows into the surface features (gaps, crevices, recesses, etc.) of the weaving structure. The mold material bonds to the surface of the tape member 148 as a result, and is referred to herein as in-mould-bonding. The in-mould-bonding may be created by a combination of chemical bonding and mechanical bonding. The chemical bonding may include adhesion (generally between two materials that are not the same), cohesion (generally between two materials that are the same or very similar), and/or other types of bonding that may otherwise occur between two materials in the environment of heat and pressure as a result of the injection mold process. Mechanical bonding may occur as the injection mold material at least partially penetrates into and forms around the weave pattern of the warp and weft yarns to which the mold material mechanically attaches/engages when cooled. The bonding is referred to as in-mould-bonding because it is accomplished within the mold components during the injection molding process to form the shell. The in-mould-bond is formed over an area of the surface of the tape member 148 that is exposed in the mold cavity 302 to the mold material during the injection molding process. In one example, the outer surface 156 of the first portion 160 of the tape member 148 is exposed in the mold cavity, and is in-mould bonded to the rim 134 of the luggage shell 116, 118. In some example, the in-mould-bonding is limited to one side (for example, the outer side 156) of the tape member 148.

In the sample shown in Fig. 3B, there are 56 intersections where either a warp yarn 172 or a weft yarn 174 is exposed on the outer surface 156 of the tape member 148. The number of exposed intersections in this example directly relates to the number of warp yarns 172 (e.g. columns) and weft yarns 174 (e.g. rows) in the chosen area. With 8 warp yarns 172 and 7 weft yarns 174, the number of intersections is 8 x 7 = 56. 28 intersections are weft yarns 174 and 28 intersections are warp yarns 172. In the first portion 160 of the tape member 148, encompassing 4 weft yarns 172 and 7 weft yarns 174, there are 28 intersections exposed on the outer surface 156, with 14 being warp yarns 172 and 14 being weft yarns 174. Similarly, in the second portion 162, encompassing 4 warp yarns 172 and 7 weft yarns 174, there are there are 28 intersections exposed on the outer surface 156, with 14 being warp yarns 172 and 14 being weft yarns 174.

Referring still to Fig. 3B, in the first portion 160 of the tape member 148, the injection molding material in-mould-bonds to both the weft yarns 174 and the warp yarns 172 that are exposed at the surface 156. In this example, the injection molding material in-mould-bonds with all of the possible 28 intersections. Because the first portion 160 is made of warp and weft yarns that are of a first material that chemically bonds with the injection molding material, the in-mould-bond that forms is sufficiently strong to secure the primary zip member 144, 146 to the rim of the luggage shell to withstand the rigors of use without the need for stitching, adhesives, or other more labor intensive attachment methods.

Still referring to Fig. 3B, in one example, the first portion 160 of the tape member 148 may include all warp yarns 172 made of the first material, and all weft yarns 174 made of the first material. This may result in substantial in-mould-bonding between the tape member 148 and the rim portion 132. In other examples, the first portion 160 may include a number of warp yarns 172 made of the first material comprising 50% or more of the warp yarns, 60% or more of the warp yarns, 70% or more of the warp yarns, 80% or more of the warp yarns, or 90% or more of the warp yarns. The above examples represent the warp yarns 172 of the first portion may be predominately, or predominantly, made of the first material. As used throughout, predominately and/or predominantly means 50% or more, for example 50% or more of the warp yarns 172 in the first portion 160 are made of the first material. These percentages also generally represent the same percentage of warp yarn 172 intersections exposed on the outer surface 156 of the first portion 160 of the tape member 148. Generally the higher the percentage of the warp yarns (or warp yarn intersection) made of the first material, the higher the strength of the in-mould-bond between the outer surface 156 of the tape member 148 and the inner surface 140 of the rim portion 132. The weft yarn 174 in this example is the same throughout the plain weave, and may be the same along all or part of the length of the tape member 148.

Referring still to Fig. 3B, in the second portion 162 of the tape member 148, the injection molding material in-mould-bonds to the weft yarns 174 exposed on the surface 156, and may not in-mould-bond, such as for example chemically bond, with the warp yarns 172 that are exposed on the surface 156. In this example, the injection molding material bonds with 14 of the possible 28 intersections. Because the second portion 162 is made of weft yarns that are of a first material that chemically bonds with the injection molding material, and warp yarns that are of a second material that may not bond with the injection molding material, the overall bonding on the outer surface 156 may be inadequate, and may easily disengage from the inner surface 140 of the rim. However, where the second material is selected to be abrasion resistant, for instance, the second portion 162 is able to withstand the frequent frictional contact with the zipper slider 159 and provide the primary zipper assembly 130 with a long service life.

Still referring to Fig. 3B, in one example, the second portion 162 of the tape member 148 may include all warp yarns 172 made of the second material, and all weft yarns 174 made of the first material. This may result in substantially no in-mould-bonding between the tape member 148 and the rim portion 132. In other examples, the first portion 160 may include the number of warp yarns 172 made of the second material comprising 50% or more of the warp yarns, 60% or more of the warp yarns, 70% or more of the warp yarns, 80% or more of the warp yarns, or 90% or more of the warp yarns. In these examples, the first portion 160 is predominately and/or predominantly made of the second material. These percentages also generally represent the same percentage of warp yarn 172 intersections exposed on the outer surface 156 of the second portion 162 of the tape member 148. Generally the higher the percentage of the warp yarns (or warp yarn intersections) made of the second material, the lower the strength of the in-mould-bond between the outer surface 156 of the tape member 148 and the inner surface 140 of the rim portion 132. The weft yarn 174 in this example is the same throughout the length of the plain weave.

The ease of recyclability of a luggage case is maintained or enhanced by the attachment of the zipper assembly in the injection molding process forming the shell. In one example, where the first portion 160 and second portion 162 of the primary zip member 144, 146 are made of a first material that are recyclable along with the material forming the respective shell 116, 118, the first and second portions 160, 162 may be recycled along with the shell 116, 118 itself. In order to recycle the shell with the attached primary zip member, the tape member 148 is cut along its length to separate the zipper teeth 158 from the first portion 160 of the tape member prior to recycling.

In another example, where the first portion 160 of the primary zip member 144, 146 are made of a first material that are recyclable along with the material forming the respective shell 116, 118, the first portion 160, 162 may be recycled along with the shell 116, 118 itself. In order to recycle the shell with the attached primary zip member, the tape member 148 is cut along its length to separate the second portion 162 (including the zipper teeth 158) from the first portion 160 of the tape member 148 prior to recycling.

Figs. 4A-4E are representative cross sections taken along lines 4A, 4B, 4C, 4D, 4E in Fig. 1C. These sections each represent an example structure of a primary zip member 144, 146 engaging the respective rim portion 132, 134 extending around all or part of the periphery of the luggage shell 116, 118.

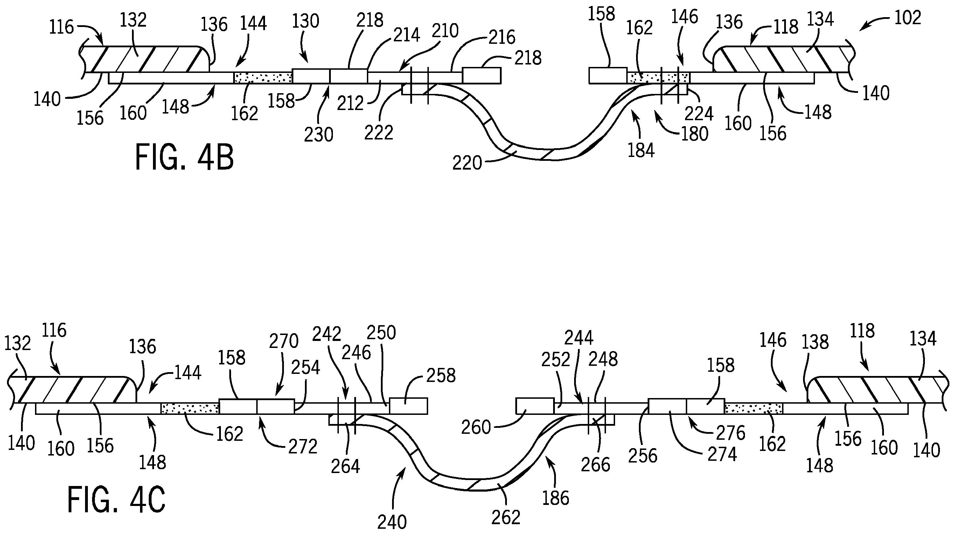

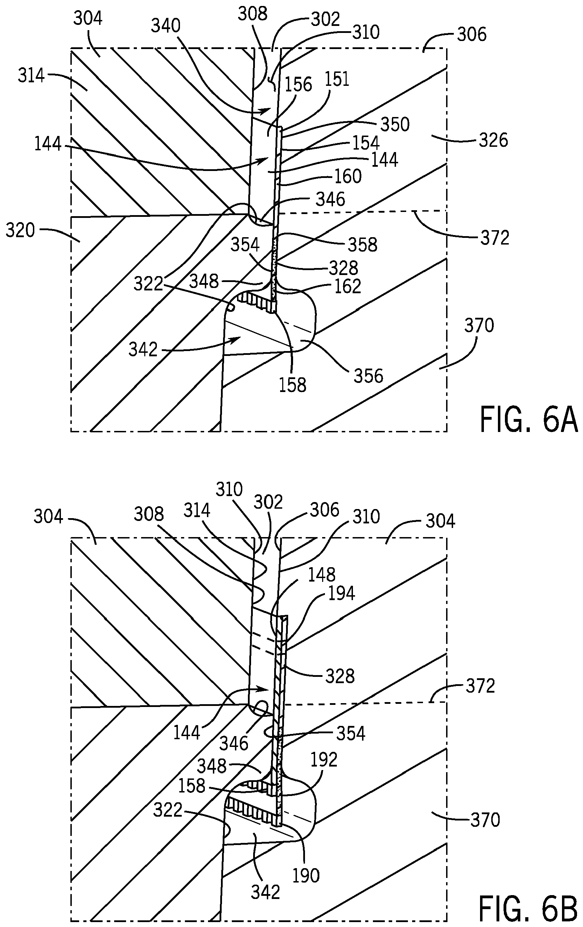

An accessory zipper assembly 180 may attached to the shell 116, 118 of luggage case 102, in conjunction with the primary zip member 144, 146, during the injection molding process used to form the shell 116, 118. In one example, all or part of an accessory zipper 180 may be attached to the primary zip member 144, 146 so that both the accessory zipper assembly 180 and the primary zip member 144, 146 are bonded to the respective shell 116, 118 when the shell is formed by injection molding. Examples of the accessory zipper assembly 180 may include a liner zipper assembly 182 (see Fig. 4A) for attaching a liner to the interior of a shell of the luggage case, or an integral expansion zipper assembly 184 (see Fig. 4B) to allow expansion between the shells of the luggage case. Fig. 4A shows an accessory zipper assembly 180, in this example a liner zipper assembly 182, attached to the primary zipper assembly 144, which in turn is bonded to the interior surface 40 of the rim portion 132 of injection molded luggage shell 116. In particular, the liner zipper assembly 182 is attached to the first primary zip member 144. This example is described with reference to a single shell 116 of the luggage case 102, but may be applicable in the same or similar manner to the other shell of the luggage case such that either or both shells of the luggage case may have liner zipper assemblies. The liner zipper assembly 182 includes a first liner zip member 186 and a second liner zip member 188 selectively joined together by the respective zipper teeth 190 on each of the first and second liner zip members. The zipper teeth 190 may be comparatively narrower than the zipper teeth 158 of the primary zipper assembly 144. In one example, the zipper teeth 190 may be 3 mm wide and the primary zipper assembly 144 may be 8 mm wide. The first liner tape member 192 may be attached, such as by stitching 194, to the first tape member 148 of the first primary zip member 144 of the primary zipper assembly 130. The first liner tape member 186 of the zipper liner assembly 182 may be attached to and extend from the tape member 148. In more detail, the first liner tape member 186 may be attached to the first portion 160 or the second portion 162 of tape member 148. The second liner tape member 196 of the second liner zip member 188 is attached, such as by stitching 198, to the liner 200 of the luggage shell 116. When the first primary zip member 144 is bonded to the rim portion 132 during the injection molding of the first shell 116, the liner tape member 192 of the first liner zip member 186 is also attached to the rim portion 132. See, for example, Fig. 6B. This simplifies the assembly of the liner 200 on the luggage shell 116 and eliminates the labor and expense associated with separately attaching the liner zip assembly 182 to the luggage shell 116.

Fig. 4B shows another example of an accessory zipper 180. In this example an integrated expansion zipper assembly 184 is attached to the primary zipper assembly 130, which in turn is in-mould-bonded to the interior surface 140 of the rim portion 132, 134 of respective injection molded luggage shells 116, 118. The expansion zipper assembly 184 includes an expansion zip member 210 including an expansion tape 212 having a first and second opposing edges 214, 216 with zipper teeth 218 attached to each opposing edge. An expansion gusset 220 is attached between the second primary zip member 146 and the expansion zip member 210. In one example the expansion gusset 220 has opposing edges 222, 224 defining a width, with a first opposing edge 222 attached to the expansion zip member 210, and a second opposing edge 224 attached to the second primary zip member 146. The gusset 220 may be made of a flexible material. In one example, the gusset 220 may be attached at opposing edges 222, 224 to the expansion zip member 210 and the primary second zip member 146 by stitching. A primary opening 230, such as an access opening, into the luggage case 102 is formed by the zipper teeth 158 on the first primary zip member 144 releasably engaging the zipper teeth 218 on the first edge 222 of the expansion zip member 210. The luggage case 102 moves between an expanded configuration (shown in Fig. 4B) where the gusset 220 is extended, and an unexpanded or stowed configuration where the gusset 220 is gathered in an unextended configuration, by the zipper teeth 218 on the second edge 224 of the expansion zip member 210 releasably engaging, by a zipper slider, with the zipper teeth 158 on the second primary zip member 146. Because the gusset 220 is attached to the second primary zip member 146, when the second primary zip member 146 is bonded to the rim portion 134 during the injection molding of the second shell 118, the expansion zipper assembly 184 is also coupled to the rim portion 134. This simplifies the assembly of the expansion assembly of the luggage shell 116 and eliminates the labor and expense associated with separately attaching the expansion zip assembly 184 to the luggage shell 116. In another example, the expansion zipper assembly 184 may be attached to the first zip member 144, and thus coupled to the first shell 116.

Fig. 4C is an additional example of a modular expansion zipper assembly 240 used in conjunction with the primary zipper assembly 130, and is shown in an open, partially expanded position. The modular expansion zipper assembly 240 may be used to convert an unexpandable luggage case 102 into an expandable luggage case 102. The modular expansion assembly 240 includes a first 242 and second 244 modular zip member, each including a modular zipper tape 246, 248 with inner 250, 252 and outer 254, 256 opposing side edges having zipper teeth 258, 260, and a gusset 262 extending between the first 246 and second 248 modular zip tapes. Opposing edges 264, 266 of the gusset 262 may be attached to each of the respective first 246 and second 248 modular zipper tapes by stitching. The gusset 262 may be of a flexible material that may fold and gather when in the stowed or unexpanded position, and extend to a full width when in an expanded position.

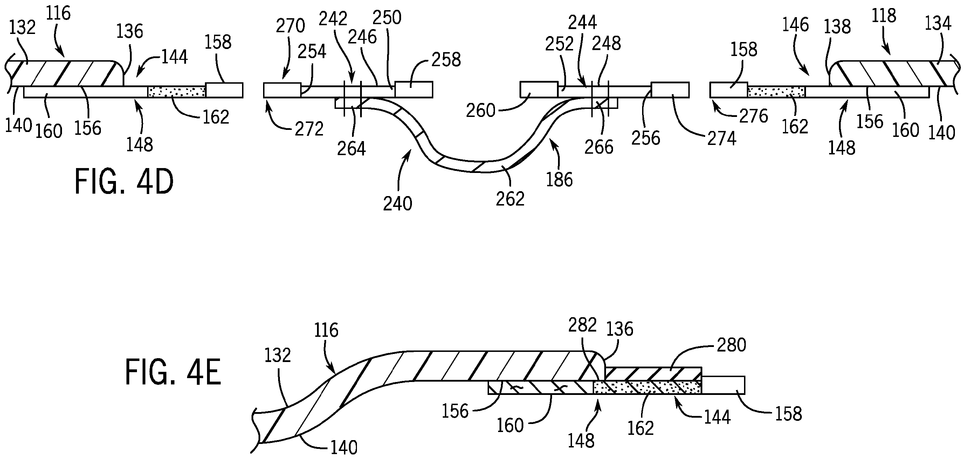

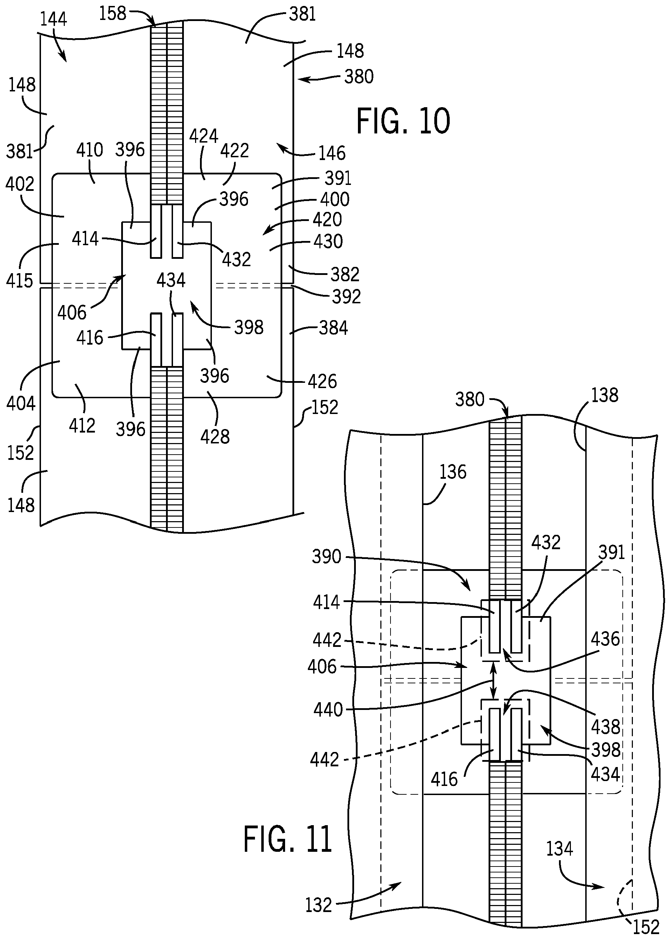

By connecting one opposing edge 254 of the modular expansion zipper assembly 240 to the first primary zip member 144, and the other opposing edge 256 of the modular zipper assembly 240 to the second primary zip member 146, an expansion function is added to the luggage case 102. The zipper structure formed by the zipper teeth 158 of the first primary zip member 144 and the zipper teeth 270 on the one opposing edge 254 of the modular expansion zipper assembly 240 creates the access zipper 272 forming the primary opening into the luggage case. The zipper structure formed by the zipper teeth 158 of the second primary zipper 146 and the teeth 274 along the other opposing edge 256 of the modular expansion zipper assembly 240 may form the construction zipper 276, which is primarily used for assembling the luggage case 102. Fig. 4D shows the expansion zipper assembly 240 detached from (for example unzipped from) the first primary zip member 144 and the second primary zip member 146. Zipper sliders (not shown) may be used to engage and disengage the access 272 and expansion 276 zippers. End clips (for example, end clip 442 show in Fig. 11) or other obstructions may be positioned on the construction zipper to keep it from being functional to open the luggage case. The modular expansion zipper assembly 240 allows production of luggage shells 116, 118, with or without the injection molding of the shell and injection mold bonding of the primary zipper assemblies as described herein, with the added flexibility of converting the unexpandable luggage case to an expandable luggage case as needed to meet market demands. This helps avoid underproducing a product that may have high demand that may not be met, and/or over-producing a product that requires discounting to support sales, or may even be donated, destroyed, or recycled.

Fig. 4E shows an example of the first primary zip member 144 having a cover layer 280 , the primary zip member 144 in-mould-bonded to the rim portion 132 of an injection molded luggage shell 116 in the injection molding process used to form the luggage shell, as described herein. The cover layer 280 may be applied to the upper surface 156 of the tape member 148 prior to the tape member 148 being bonded to the shell 116. The cover layer 280 on the top surface 156 may extend all or part of the way between the edge 136 of the rim portion 132 and the zipper teeth 158. Alternatively, the cover layer 280 may be applied to the lower surface 154 of the tape member 148, or may be applied to both the upper and lower surfaces of the tape member 148. The cover layer 280, where positioned on the bottom surface of the tape member 148 may extend all or part of the way between the edge 152 and the zipper teeth 158. The cover layer 280, when on the top surface 156 may be beneficial as it may enhance the abrasion of the tape member 148. The cover layer 280, when on the top surface, bottom surface or both surfaces, may enhance the water resistance of the tape member 148. The cover layer 280 may include one or more layers of a material, such as a plastic material. The cover layer may include at least one layer of a thermoplastic polyurethane (TPU). The cover layer may have a thickness of approximately 0.05 mm to 0.8 mm. As shown in Fig. 4E, the cover layer may extend entirely or partially from the edge 136 of the rim portion 132 to the zipper teeth 158. In this example, the rim portion 132 overlays the tape member 148, including the entirety of the first portion 160, and also overlays a portion of the width of the second portion 132 of the tape member 148. The inside surface 140 of the rim portion 132 is bonded to the outside surface 156 of the first portion 160 of the tape member 148 as described above. The inside surface 140 of the rim portion 132 overlies but is not attached (is unaffixed) to the second portion 162 of the tape member 148 forming a bonding gap 282 adjacent to and below the peripheral edge 136 of the rim portion 132. This bonding gap may act as a hinge structure and allow for the cover layer 280 to articulate or bend relative to the rim portion 132 along all or part of the length of the second portion 162 of the tape member 148. This bond gap 282 is formed, in this example, because second portion of the tape member may be made of a second material, different than the first material, selected so as to weakly bond, only partially bond, or not bond with or affix to the injection molding material forming the rim portion 132.

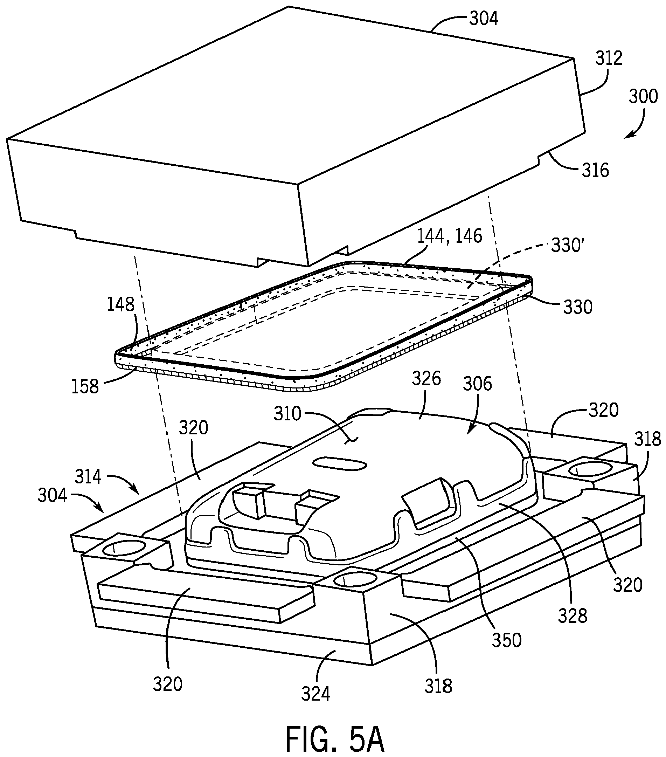

Figs. 5A-5G show an example of the mold assembly components 300 defining the mold cavity 302 (see for example Fig. 6A) used for the injection molding of the luggage shell 116, 118. Also shown is the positioning of the primary zip member 144 or 146 within the mold assembly components 300 (depending on which shell is being formed) prior to and during the injection molding process that forms the shell. The positioning of the primary zip member 144 or 146 within the mold cavity 302 allows the primary zip member, with or without a cover layer, and/or optionally including one of the accessory zipper assemblies 180, to be in-mould-bonded to the rim portion 132, 134 of the respective injection molded shell 116, 118 during the injection molding process.

Fig. 5A shows the mold assembly components 300 in a partially exploded view. The mold assembly components include the outer mold parts 304 and the inner mold parts 306. The mold cavity 302 is formed between an outer surface profile 308 of the outer mold parts 304 and an inner surface profile 310 of the inner mold parts 306 when the mold is closed.

The outer mold parts 304 define the outer surface profile 308 of the mold cavity 302 and shape the outer surface 142 of the final injection molded luggage shell 116, 118, including of the respective peripheral rim portion 132, 134. The inner mold part or parts 306 (also referred to as the mold plug or mold core) define the inner surface profile 310 of the mold cavity 302 and shape the inner surface 140 of the final injection molded luggage shell 116, 118, including of the respective peripheral rim portion 132, 134. The inner mold parts 306 may be made of a single structure or a combination of structures. The outer mold parts 304 include an upper component 312 and a slider component 314 that together form the outer surface profile 308 of the mold cavity 302, which defines the outer surface shape 142 of the final luggage shell. The upper component 312 defines an upper recess 316 that forms at least part of the outer surface profile 308 of the mold cavity 302. In one example, the upper recess 316 of the outer mold component 304 forms at least part of the outer surface 142 of the main panel 104, 106, top 108 and bottom 110 panels, and opposing side panels 112, 114 of the luggage case 102 (see Fig. 1A).

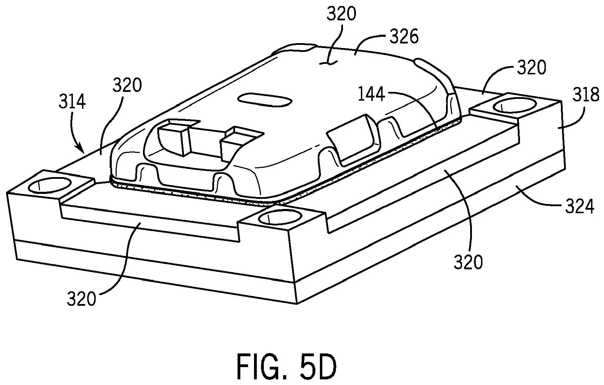

The slider component 314 includes a slider frame 318 and a plurality of sliders 320 that move between a retracted position (as shown in Fig. 5A) and a process position (as shown in Fig. 5D). When the sliders 320 are configured in the process position (Fig. 5D), the upper recess 316 of the upper mold component 312 and the slider components 318 together define the all or substantially all of the outer surface profile 308 of the mold cavity 302. In the example shown, there is one slider 320 on each of the four sides of the slider frame 318. Each slider 320 defines an inner edge surface 322 (see Fig. 6A). When the sliders 320 are in the process position (Fig. 5D), the inner edge surface 322 of each slider 320 match with the outer surface profile 308 of the upper recess 316. Each slider 320 may form at least part of the outer surface profile 308 of the mold cavity 302. In one example, the sliders 320 together define the mold surface that shapes the outer surface 142 of the peripheral rim portion 132 of the respective shell 116, 118. Each slider 320 may correspond to the outer surface 142 of at least part of the rim portion 132 of one of the top panel 108, opposing side panels 112, 114, and bottom panel 110 of the luggage shell 116.

Referring still to Fig. 5A, the inner mold components 306 include the mold base 324 and the mold core 326, about which the outer mold components 304 fit. The mold core 326 may define the inner surface profile 310 of the mold cavity 302 and shape the inner surface 140 of the final injection molded luggage shell 116. In general the peripheral dimension of the mold core 326 increases from its top portion down to the lower peripheral edge portion 328. In the example shown, the lower peripheral edge portion 328 defines the mold surface that shapes the inner surface 140 of the rim portion 132 of the final luggage shell 116, and extends around the mold core 326 that shapes the inner surface 140 of the top panel 108, opposing side panels 112, 114, the bottom panel 110 and the respective corners between these panels. The lower peripheral edge portion 328 may curve in a convex-outwardly direction along these portions of the mold core 326. A lower peripheral edge portion 328 of the inner mold part 306 (for example the mold core 326) may be shaped to curve in a convex-outwardly direction along part of the length of the peripheral edge portion 328, and in one example along the entirety of the length of the peripheral edge portion 328.

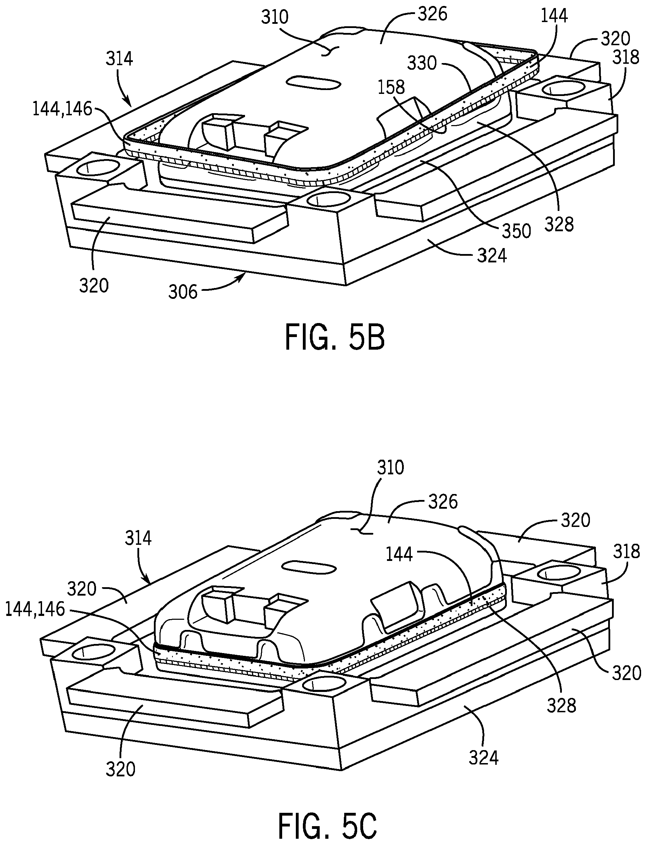

As shown in Figs. 5A, 5B, and 5C, the primary zip member 144 is formed into a zipper loop 330 for placement inside the mold cavity 302 so that the primary zip member 144 is in-mould-bonded to the peripheral rim portion 132 of the luggage shell 116 during the injection molding process. In one example, the primary zip member 144 is positioned in the mold cavity 302 so as to be in-mould-bonded to the inner surface 140 of the rim portion 132 of the luggage shell 116. In another example the primary zip member 144 is positioned in the mold cavity 302 so as to be in-mould-bonded to the outer surface 156 of the rim portion 132.

In the example shown, the zipper loop 330 is positioned around the lower peripheral edge portion 328 of the mold core 326 prior to the joining of the upper mold parts 304 with the lower mold parts 306 to form the mold cavity 302. In one example, the zipper loop 330 is stretched or expanded from its nominal length forming a nominal circumference (factoring in any overlap of the ends, if any) to a larger circumference, and thus is in tension, when positioned on the lower peripheral edge portion 328 of the mold core 326. The zipper loop 330' shown in dash in Fig. 5A is un-tensioned and defines a nominal circumference. The zipper loop 330 shown in solid in Fig. 5A is stretched to a larger circumference for positioning over the mold core 326 as discussed below. The zipper loop 330 may be positioned on the lower peripheral edge portion 328 by being stretched to a larger circumference prior to being positioned on the mold core 326, as is shown and described here. Alternatively, the zipper loop may be stretched by positioning the zipper loop 330 on the mold core 326 and sliding it downwardly over the mold core 326 and into position. In one example, the zipper loop 330 that is positioned in the mold cavity 302 may include an accessory zipper 180 as described further below.

Fig. 5A shows the zipper loop 330 above the mold core 326 and prior to being positioned around the mold core 326. The zipper loop 330 is oriented with the zipper teeth 158 of the primary zip member 144 extending toward the mold core 326. The zipper loop 330 is stretched to enlarge its circumference and is positioned such that it is moved down and remains spaced away from the mold core until it is aligned with the lower peripheral edge portion 328 of the mold core 326. In this configuration the zipper loop 330 is released to resiliently shrink and engage the periphery 328 of the mold core 326 (Fig. 5C). The zipper loop 330 remains in a stretched configuration (and under tension) when positioned around the lower peripheral edge portion 328.

The zipper loop 330 may be stretched and positioned on the lower peripheral edge 328 of the mold core 326 in a number of ways. For example, human operators may grip the zipper loop at discrete locations along its circumference and pull generally outwardly to increase the circumference. Once enlarged, the zipper loop 330 may be positioned on the lower peripheral edge 328. In another example, the zipper loop may be stretched by a machine for placement on the lower peripheral edge 328. The machine may grip the zipper loop along portions of its circumference, expand the zipper loop 330 generally outwardly to clear the mold core 326, and moved down the mold core to align with the lower peripheral edge 328, where it is released to engage the mold core. Alternatively, the zipper loop may be applied to the lower peripheral edge 328 in a length or strip, with the ends attached together to form the zipper loop 330 once in place on the mold core 326.

The circumferential dimension, or circumference, of the zipper loop 330 is sized to be slightly smaller than the peripheral dimension of the lower peripheral edge portion 328 of the mold core 326 so that the tape member 148 of the primary zip member 144 that forms the zipper loop 330 is stretched to an increased circumferential dimension, creating a tension force within the tape member 148, and thus in the primary zip member 144, 146, when it is positioned around the lower peripheral edge portion 328 of the mold core 326. The tape member 148, and thus the primary zip member 144, 146, of the zipper loop 330 may also be engaged along all or a part or parts of the lower peripheral edge portion 328 of the mold core 326. In one example, the tape member 148 is continuously engaged along the entire length of the lower peripheral edge portion 328 of the mold core 326. In an example where the lower peripheral edge portion 328 of the mold core 326 defines an outwardly convex curve shape along its entire circumference, the tape member 148 may be in continuous engagement. Because the tape member 148 is in tension, the tape member 148 may also apply a compressive force against the lower peripheral edge portion 328. The zipper loop 330, which is described further below, in one example may be formed by cutting a length of the primary zip member 144 and fixing the free ends together.

The residual tension in the zipper loop 330 is beneficial because it helps the tape member 148, and as a result the primary zip member 144, 146, of the loop 330 maintain engagement where in contact with the lower edge portion 328 of the mold core 326, which in turn aids in creating an in-mould-bond between the outer surface 156 of the tape member 148 forming the zipper loop 330 with the inner surface 140 of the rim portion 132 of the luggage shell 116. Where the peripheral edge portion 328 of the mold core 326 defines a shape having outwardly convex curves, the compressive force applied by the tape member 148 also helps create the in-mould-bond. Where the tape member 148 is in contact with the lower peripheral edge portion 328, the injection molding material is more likely to only flow over the outer surface 156 of the tape member 148 to form the in-mould-bond, and less likely to also flow between the tape member 148 and the lower peripheral edge portion 328 of the mold core 326 and surround the tape member 148 on both its inner 154 and outer 156 surfaces. Additionally, where the tape member 148 applies a compressive force to the lower peripheral edge portion 328, the injection mold material is even less likely to flow between the tape member 148 and the lower peripheral edge portion 328 of the mold core 326.

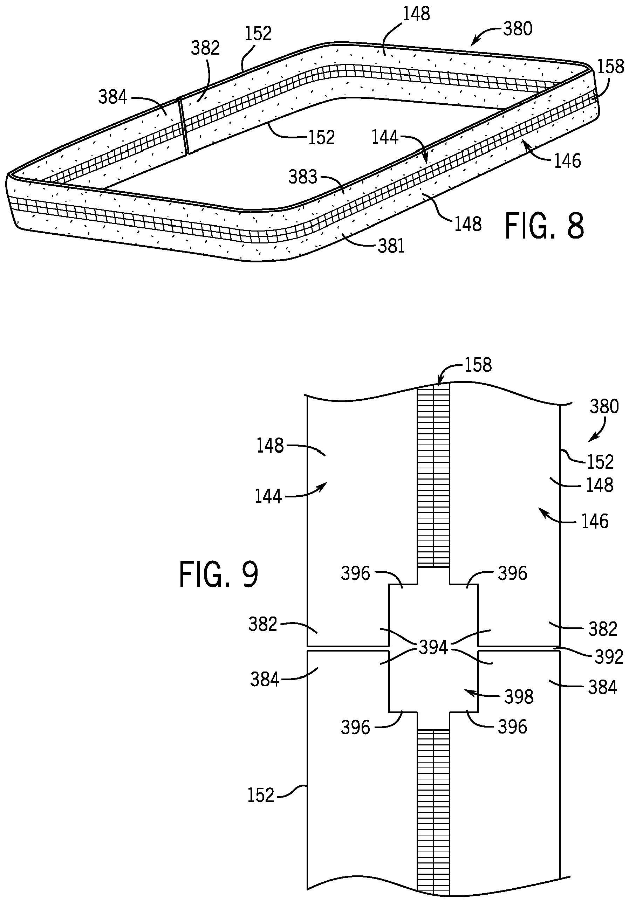

Additionally, the stretched zipper loop 330 accommodates the possible variance in the actual circumference of the final luggage shell 116, 118 caused by shrinkage. In some examples the actual circumference of the final molded shell 116, 118 is the same or similar to the actual mold circumference. The circumference of the peripheral edge portion 328 of the final luggage shell 116, 118 when in the mold cavity 302 is determined by the dimensions of the mold cavity 302. After extraction from the mold cavity 302, the circumference of the final shell 116, 118 may shrink by an amount due to several factors, including the change in temperature from the mold temperature to ambient temperature, the three dimensional shapes formed in the particular luggage shell design (wheel recesses, tow handle recess, etc.) and the type and content of the injection mold material. For instance, the inclusion of different color pigment elements in the injection molding material cause the final molded luggage shell 116, 118 to shrink different amounts. The shrinkage reduces the circumference of the peripheral edge of the final luggage shell by approximately 1% to 4% of the mold circumference, with 2% being a common amount of shrinkage. The length of the zipper loop 330 is chosen such that when formed into a loop, it is stretched and tensioned when positioned onto the edge portion 328 of the mold, and so that it remains stretched relative to its nominal length, and is under a residual tension greater than its nominal tension, after the circumference of the final luggage shell shrinks. In one example, the nominal length of the zipper loop 330 (for example the circumference of the loop) is chosen such that may be expanded/stretched to a mounting circumference for being positioned on the lower peripheral edge 328 of the mold core 326 (as described above). The tension in the zipper loop 330 at the mounting circumference may reach approximately 200N. The zipper loop 330 is then relaxed to a first circumference matching the mold circumference (when positioned on the lower peripheral edge 328), which creates a first tension level (e.g. mold tension level). This first tension level is less than the mounting tension level. After the molding process, and the shell is formed and removed from the mould components, the circumference of the shell may shrink to a second circumference and thus a second tension level (e.g. residual tension level). This second tension level is less than the first tension level. In one example, the first circumference (for example, defined by the mold core) may be greater than or equal to the second circumference (for example, after the shell has shrunk). The first tension level may be greater than or equal to the second tension level. The second circumference may be greater than the nominal circumference. The second tension level may be greater than the nominal tension level. The zipper loop 330 may include a keying feature for use in aligning the zipper loop 330 on the lower peripheral edge 328 of the mold core 326. One example of a keying feature may be a notch 396 formed in the zipper loop 380 as shown in Figs. 8-11, which describes the formation of one example of a zipper loop 380 that may be utilized for in-mould-bonding as described herein. The notch 396 may be aligned with a feature on the mold core 326 (for example such as a mark on the mold core 326) when the zipper loop 330 is positioned on the lower peripheral edge 328.

Referring to Fig. 5D, the sliders 320 are positioned in the process position, having moved inwardly toward the mold core 326. The inner surface 322 of each slider 320 overlies all or a part of the tape member 148. Fig. 5E shows the upper mold 304 part moving toward to the slider frame, with Fig. 5F showing the upper mold part 304, slider frame 318, and lower mold parts 306 assembled. In the assembled configuration, the mold cavity 302 is defined, and the zipper loop 330 is positioned around the lower peripheral edge portion 328 of the mold core 326. The molding process may be executed to fill the mold cavity 302 with the mold material and form the respective shell 116, 118, while simultaneously in-mould-bonding the zipper loop 330 to the rim portion 132 of the respective luggage shell 116.

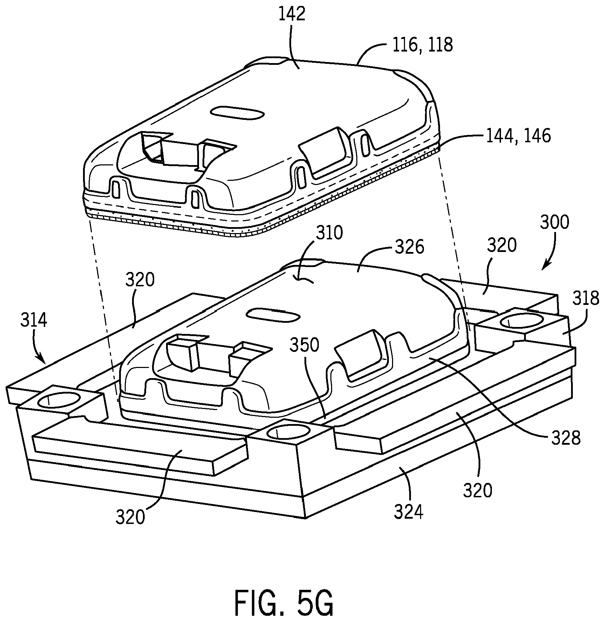

Fig. 5G shows the lower mold component 306, slider frame 318 and finished luggage shell 116, 118 after the mold process is finished and the upper mold part 304 is removed. The slider 320 are each shown in their respective outer positions, and the final luggage shell 116, 118 is extracted from the mold core 326. The zipper loop 330 is in-mould-bonded, in one example continuously along its length, to the inner surface 140 of the peripheral rim portion 132 of the luggage shell 116, 118. In one example, the tape member 148, and thus the zip member 144, 146 may be in-mould-bonded, in one example continuously along its length, to the inner surface 140 of the peripheral rim portion 132 of the luggage shell 116, 118. In one example, all or part of the first portion 160 of the tape member 148 may be in-mould-bonded continually along its length to the inner surface 140 of the peripheral rim portion 132 of the luggage shell 116, 118. Where the luggage shell 116, 118 may have shrunk as noted above, the tape member 148 remains in-mould-bonded, and is under the residual tension level. The continuous attachment along its length helps prevent "tenting" (areas where the tape member 148 is loosely connected to the rim of the shell), which interferes with the performance of the opening and closing of the zipper.

The injection molding process for forming the luggage shells 116, 118 in the mould components as described herein, and to in-mould-bond the zipper assembly to the rim of the shell, may include routine processing parameters.

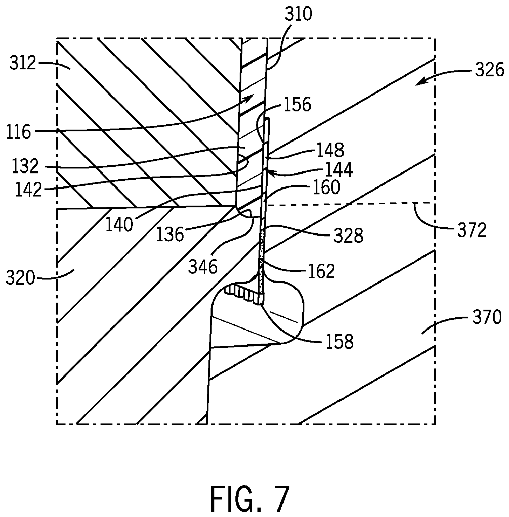

Figs. 6A, 6B and 7 show representative cross sections through the interior of the mold components 300, and specifically shows a first region 340 and a second region 342 of the mold cavity 302. The primary zip member 144, and in one example the tape member 148, is positioned on the lower peripheral edge portion 328 of the mold core 326, and extends into and between both the first region 340 and second region 342. The first region 340 includes a portion of the mold cavity 302 where the mold material flows to form the peripheral rim portion 132, 134 of the respective luggage shell 116, 118 where the first portion 160 of the tape member 148 of the primary zip member 144 is in-mould-bonded. The second region 342 includes the structure outside of the mold cavity 302 where the mold material does not flow, and in which the second portion 162 of the tape member 148 of the primary zip member 144, 146, with or without a cover layer 280, and/or optionally including one or both of the accessory zipper assemblies 180, are positioned during the mold process.

In Fig. 6A, the inner surface 310 of the mold cavity 302 in the first region 340 is defined by the outer surface of the mold core 326. The outer surface 308 of the mold cavity 302 is formed by the recess surface 316 of the outer mold part 304 combined with the inner face 322 of the slider 320. The terminal edge 346 of the mold cavity 302, which forms the edge 136, 138 of the luggage shell rim portion 132, 134, is defined by a shoulder 348 defined on a protrusion on the slider 320. The mold material does not flow beyond the shoulder 348, which is the transition between the first 340 and second regions 342. The first portion 160 of the zipper tape member 148 is positioned along and overlays a lower portion of the outer 308 of the mold core. The outer 308 of the mold core 326 may define a recess 350 that receives the first portion 160 of the zipper tape member 148. The free inner edge 150 of the zipper tape member 148 may align with, and optionally be abutted to, an edge of the recess 350. By being received in the recess 350, the outer surface 156 of the first portion 160 of the zipper tape member 148 may be flush with the outer 308 of the mold core 326 adjacent the recessed area 151. This flush positioning aids in directing the mold material to flow only over the outer surface 156 of the first portion 160 of the zipper tape member 148, forming the in-mould-bond. The mold material is impeded from flowing around and over the inner surface 154 of the zipper tape portion.

The in-mould-bond between the inner surface 140 of the rim portion 132 and the outer surface 156 of the zipper tape member 148 is created by the mold material overmolding onto and engaging with the outer surface 156 of first portion 160 of the zipper tape member 148. This in-mould-bond is formed between the inner surface 140 of the luggage shell rim 132 and the outer surface 156 of the zipper tape member 148 of either or both of the primary zip members 144, 146. As described above with respect to at least Fig. 2A, the inner surface 140 of the shell 116, 118 may bond with all of the first portion 160 of the tape member 148, or only part of the first portion 160 of the tape member 148. For example, if the width of the first portion 160 of the zipper tape member 148 is less than the width of the first region 340 (e.g. the area that is overlaid by the rim portion 132, 134), a gap 282 is formed (See Fig. 4E). The inner surface 140 of the rim portion 132, 134 bonds with the first portion 160 of the zipper tape member 148 where the zipper tape member 148 includes weft yarns 174 that are compatible with bonding to the mold material, and optionally including a sufficient number of warp yarns 172 that are compatible with bonding to the mold material, and a strong in-mould-bond on one side, such as the outer surface 156, of the zipper tape member 148 is created.

The second region 342 of the mold cavity 302 is defined below the first region 344 and includes the protrusion 348 below the shoulder 346 and a storage cavity 356. The face 354 of the protrusion 348 is spaced away from the outer 308 of the mold core 326 to form a gap 358. The gap 358 may have a depth dimension that is the same as the recess 350 in the outer 308. The gap 358 extends between the first region and the storage cavity 356 of the second region 342. The zipper tape member 148 extends through the gap 358 and into the storage cavity 356, with the face 354 of the shoulder closely spaced adjacent to, or in another example engaging, the outer surface 156 of the zipper tape member 148. The zipper teeth 158 are positioned within the storage cavity 356. The mold material does not flow into the gap 358, and thus because the second portion 162 of the zipper tape member 148 extends through the gap, and is engaged with the face 354 of the shoulder 346, the second portion 162 is not overlaid with mold material. In one example, the second portion may remain exposed or uncovered by mold material. A shown in Fig. 6A, the first portion 160 of the zipper tape member 148 extends into the gap 358, and the second portion 162 of the zipper tape member 148 extends from the gap 358 and into the storage cavity 356. In other examples, the first portion 160 of the zipper tape member 148 may not extend into the gap 358, causing some of the second portion 162 to be in the first region 340 and exposed to the mold material but not bond thereto, such as shown in Fig. 4E.

The mold components 304 may be modified to allow a primary zip member 144, 146 along with an accessory zipper assembly 180 or cover layer 280, or both, to be bonded to the inner surface 140 of the respective rim portion 132, 134 of the respective luggage shell 116, 118. For example, Fig. 6B shows an example of the tape member 148, with an accessory zipper assembly 180 connected thereto, positioned about the lower peripheral edge portion 328 of the mold core 326 prior to the injection molding process. In this example the accessory zipper assembly 180 is the liner zipper assembly 182 as shown in Fig. 4A. In other examples the accessory zipper assemblies of Figs. 4B (expansion zipper assembly 184) and 4E (cover layer 280) may also be used. The recess 350 formed in the outer surface of the lower peripheral edge portion 328 of the mold core 326 may have a depth to accommodate the thickness of both the zipper tape member 148 of the primary zip member 144, as well as the zipper tape of the accessory zipper assembly 180 (such as the first liner zip tape member 192) being received in the recess 350. This helps maintain the outer surface of the tape member 148 flush with the outer surface of the mold core 326, which helps insure the mold material only engages the outer surface 156 of the tape member 148 to in-mould-bond with the inner surface 140 of the rim portion 132 of the respective shell 116, 118. The zipper teeth 158 of both the primary zip member 144 and the accessory zipper assembly 180 may be positioned in the storage cavity 356 during the injection molding process. Similarly, the cavity 356 may receive the portions of the integrated expansion zipper assembly 184 (such as the expansion tape 212 and zipper teeth 218) (such as shown in Fig. 4B) or portions of the cover 280 if applied to the tape member 148 (such as shown in Fig. 4E).

Fig. 7 shows the first 340 and second 342 regions of the mold components 304 as shown in Fig. 6A with the injection molding material forming luggage shell 116. In the example shown, the rim portion 132 of the luggage shell 116 overlies the zipper tape portion 148 of the primary zip member 144. The inner surface 140 of the rim portion 132 of the luggage shell 116 is bonded in a facial manner to the outer surface 156 of the zipper tape portion 148 of the primary zip member 144. The rim portion 132 partially overlies of the first portion 160 of the tape portion 148. The rim portion 132 does not overlay the entirety of the first portion 160 of the zipper portion 148, with a small amount remaining uncovered, along with the entirety of the second portion 162 of the tape portion 148.

The inner mold portion, specifically the mold core 326 and the lower peripheral edge portion 328, is shown in Figs. 6A, 6B and 7 as being one integral structure. In other examples the lower peripheral edge portion 328 and the mold core 326 may be separate components in order to allow different mold shapes to be used in forming the luggage shells 116, 118. For instance, all or a portion of the lower peripheral edge portion 328 on the mold core 326 may be formed by a separate component 370, such as a mold insert. Dashed line 372 represents a line of separation between the mold core 326 and the mold insert 370. The mold insert may be removed and replaced with a different mold insert having different mold surface characteristics. For example, the shape of the surface formed by the lower peripheral edge portion 328 may be changed, or the size of the cavity 356 may be changed to be larger or smaller in volume if needed for an accessory zipper assembly 180.

Fig. 8 shows a matched zipper loop 380, similar to or the same as the zipper loop 330 described above with respect to Figs. 5A-7, formed by a first primary zip member 144 and a second primary zip member 146 attached together by their respective zipper teeth 158. The first primary zip member 144 forms a first primary loop 381, and the second primary zip member 146 forms a second primary loop 383. The matched zipper loop 380 may be formed by cutting a defined portion of matched first 144 and second 146 primary zip members and attaching the opposing free ends 382, 384 together. The cut portion of the matched first 144 and second 146 primary zip members may be based on the number of teeth on each portion, or may be based on the length of each portion necessary to create an intended circumference. Whether based on length or number of teeth, the cut portion may be referred to as a nominal length. In one example, the number of teeth on each of the first and second primary zip members are the same. Because the teeth have a defined size and are generally regularly spaced along the zip members, cutting the matched first and second primary zip members to the same length likely results in each zip member having the same number of teeth. The free ends of each primary zip member may be attached together when the first and second primary zip members 144, 146 are attached by their respective teeth, or may be attached together after the primary zip members 144, 146 are separated. As described herein, in one example the primary zipper tape members 144, 146, once formed into a loop 380, may be separated from one another into first and second primary loops 381 and 383, and each separately positioned in a separate mold cavity 302 in order to be bonded to a respective shell 116, 118 during the injection molding process. Also, each primary zip member 144, 146 may be cut into a desired portion (for example defined by a desired number of zipper teeth) and formed into a loop independently from the other.

The free ends 382, 384 of each primary zip member 144, 146 may be attached directly together, with the respective free ends abutted or overlapping, by stitching, adhesives, ultrasonic welding, bonding, or by other means. The free ends 382, 384 may also be attached together, with the respective free ends abutted, overlapping, or spaced apart, by one or more separate joining members.

Each of the matched first and second primary zip members 144, 146 may be paired for use together, each on its own luggage shell, in a luggage case 102, or may be used interchangeably with other luggage shells including primary zip members having the same or similar number of teeth.. Each of the matched first and second primary zippers are bonded to their respective shell in the injection molding process. Each shell may then be matched with any other shell having a corresponding zip member with the same or similar number of teeth. Each of the matched first and second zip members 144, 146 include a respective first and second zipper tape member 148 and associated first and second zipper teeth 158.

As noted above, each of the first and second zipper tape portions 144, 146 have the same or similar number of first and second zipper teeth 158, respectively. Having the same or similar number of teeth on each zip member allows the zip members to adequately engage one another when respectively attached to a luggage shell, with the benefits described below. In one example, a luggage case having a zipper length of 225 cm includes approximately 1250 teeth on each zip member (each tooth is approximately 1.8 mm). The difference in the number of teeth between the first and second primary zip members 144, 146 may be in a range of approximately 0.1% to 1% in one example, and approximately 0.1% to 0.3% in another example, and may be a particular value of 0.2% in another example. In another example, the difference in the number of teeth 158 on each of the first and second primary zip members 144, 146 may be +/-2 teeth, or in other words approximately 0.16%.

Because the first and second zip members 144, 146 have the same or substantially the same number of zipper teeth, and the zipper teeth are similarly sized and evenly spaced, the first and second zipper tape portions 148 may be the same or substantially the same length as one another.

The similarity in number of teeth of each of the matched first and second primary zip members 144, 146 used on paired luggage shells 116, 118 in a luggage case 102 is beneficial for many reasons. For example, when the luggage shells are connected together by the matched first and second primary zip members 144, 146, the luggage shells 116, 118 may have little to no deformation relative to one another. Minimal deformation means that the luggage case does not appear mis-shaped or twisted, and/or the support members, such as the wheels, may each contact the support surface (e.g. floor) together. Additionally or independently, in some examples, where the first and second primary zip members 144, 146 have substantially the same or similar number of teeth 158, the engagement and disengagement of the zipper teeth by the slider to open and close the luggage case may occur more smoothly, and the zipper slider may more easily correct the occasional mismatched zipper teeth. In the same or other examples, the respective zipper tape portions of the first and second primary zip members 144, 146 may stretch or expand approximately the same amount when being positioned in the respective mold cavity 302, and thus have the same or a similar level mold tension level prior to the injection molding step of their respective shell. They may also have the same or similar residual tension level after the respective shell is formed and shrinks after removal from the mold. A same or similar residual tension level aids in the zip members on two paired shells operating smoothly together over repeated use, and reduces the likelihood of inconvenient misalignments that may damage the zipper teeth and overall operation.

Figs. 9-11 show the opposing ends 382, 384 of the first and second primary zip members 144, 146 attached together by a joining member 390 to form the matched primary zipper loop 380, made up of the first primary loop 381 and the second primary loop 383. Alternatively, the respective opposing ends 382, 384 of each of the primary first and second zip members 144, 146 may be joined together to form individual zipper loops if the first and second zip members 144, 146 are separated. As noted above, each primary zip member may include a tape member 148 with zipper teeth positioned along one edge. The use of the joining member 390 to connect opposing ends 382, 384 of one primary zip member 144 to form the first primary zipper loop 381 may be described, with the structure and features being similar to or the same for connecting the opposing ends 382, 384 of the other primary zip member 146 to form the second primary zipper loop 383 with a joining member 391, unless otherwise noted.

Referring to Figs. 9, 10, and 11, the attachment by the joining member 390 of the opposing ends 382, 384 of the first zip member 144 is shown. The joining member 390 is applied to each of the opposing ends 382, 384 of the first zip member 144 and secures the opposing ends together. The joining member 390 may be attached to both ends of the first zip member by stitching, adhesive, or bonding to engage each opposing end and hold the ends in position relative to one another. The joining member 390 may sustain a tension load of approximately 200N, which may occur as the first primary loop 381 is stretched prior to being positioned around the lower peripheral edge portion 328 of the mold core 326, such loop 330 as is shown in Fig. 5C. Once the respective shell 116 is formed, the opposing ends 382, 384 of the first primary loop 381 are held in place by the in-mould-bond between the inner surface 140 of the rim portion 132 of the shell 116 and the outer surface 156 of the tape portion 160. In one example, the joining member 390 is made of a thermoplastic injection molded material applied by an injection molding process. The joining member 390 may be applied to either or both of the opposing surfaces 154, 156 of the first zipper tape member 148. In the example shown herein the joining member 390 is applied to the outer surface 156 of the first zipper tape member 148. The joining member 390 may cover all or part of the width of the tape member 148.

Referring to Fig. 9, in one example, the opposing ends 382, 384 are shown prior to the joining member 390 being attached. A gap 392 is formed between the opposing ends 382, 384 and the joining member will span the gap 392 and maintains its dimension. Alternatively, the opposing ends 382, 384 of the primary zip member 144 may abut or overlap and be held in place by the joining member 390. As shown, each interior corner 394 of each tape member 148 may define a notch 396, in which the teeth 158 are removed, as well as some of the width of the tape member 148. When configured together as a matched zipper as shown, the notches 396 form a cut-out area 398 positioned along an inner edge of each tape member 148. The notch 396 provides a space for mounting a mechanism, such as a zipper slider or zipper end clip onto the engaged zipper teeth. The notch 396 may also provide a key feature for aligning the zipper loop 330 (for example, as described above with respect to Figs. 5A-7) on the lower peripheral edge 328 of the mold core 326.

Turning to Fig. 10, the joining member 390, in one example, may have a plate-like main body 400 with a first end 402 attached to the tape member 148 of the first opposing end 382, and a second end 404 attached to the zipper tape member 148 of the second opposing end 384. The first and second ends 402, 404 of the main body 400 are positioned adjacent the zipper teeth 158 of the respective opposing end.

The main body 400 may define a cut-out 406 positioned along an inner edge and extending between the first 402 and second 404 ends. In one example the cut-out 406 results in the main body 400 having a C-shape, with a first leg 410, a second leg 412, and a main leg 415 extending between the first and second legs. The cut-out area 406 of the joining member 390 may match the cut-out area 398 in the first primary zip member 144 where the joining member 390 overlaps with the tape member 148.

The first end 402 may include a first beam 414 extending longitudinally away from and in alignment with the teeth 158 on the first opposing end 382. The first beam 414 may extend inwardly from the first leg 410 of the C-shape. The second end 404 may include a second beam 416 extending inwardly from the second leg 412. The first beam 414 and the second beam 416 extend longitudinally away from and in alignment with the respective teeth 158 on the respective first 382 and second 384 opposing end. Each of the first and second beams 414, 416 may define a lateral dimension that is less than the lateral dimension of the adjacent zipper teeth 158.

With continuing reference to Fig. 10, and as referenced above, the second primary zip member 146 may use a second joining member 391 to secure its opposing ends together to form the second primary loop 383. As with the first joining member 390, the second joining member 391 may include a main body 420 in a reverse C-shape, with a first end 422 defining a first leg 424, a second end 426 defining in part a second leg 428, and a main leg 430 extending between the first leg 424 and second leg 428. A first beam 432 may extend from the first leg 424 in a direction away from and in alignment with the zipper teeth 158. A second beam 434 may extend from the second leg 428 in a direction away from and in alignment with the zipper teeth 158. Each of the first and second beams 432, 434 of the second joining member 391 may define a lateral dimension that is less than the lateral dimension of the adjacent zipper teeth.

The joining member 390 and 391 may be applied, such as by overmolding, onto the opposing ends 382, 384 of the respective primary zip member 144, 146 when the primary zip members are joined together to form the matched loop 380, or when the primary zip members 144, 146 are separated.

Referring to Fig. 11, the matched first and second primary zip members 144, 146 from Fig. 10 may be separated before being in-mould-bonded with respective rim portion 132, 134 of a respective luggage shell 116, 118, as described above, such as with respect to at least Figs. 5A-5G. As a matched pair, the first and second primary loops 381, 383 are aligned on their respective shells 116, 118 so that the beams 414 and 432 on the first opposing ends 382 are adjacent one another to form a first lateral pair of beams 436. Similarly, the beams 416 and 434 on the second opposing ends 384 may be adjacent each other to form second lateral pair of beams 438. A slight space or gap is formed between the beams in each lateral pair to allow a slider to receive both beams and actuate the zipper teeth to mate or disengage as is desired.

Also referring to Fig. 11, a mounting gap 440 may be formed between the first lateral pair of beams 436 and the second lateral pair of beams 438 to allow application of sliders, slider end clips, end caps, and/or other mechanisms 442 needed to operate the zipper, restrict the length of zipper slider actuation along the zipper assembly, and/or terminate the zipper, respectively. As shown in Fig. 11, the first and second lateral pair of beams 436, 438 may be located in the same plane, with the size of the mounting gap 440 insufficient to allow one of the mechanisms noted above to be mounted onto the teeth of the matched zipper loop 380. A mechanism (such as a zipper slider or zipper end clip) may be mounted by, for instance, deflecting one of the lateral pairs of beams downwardly, such as for example the second lateral pair of beams 338 (into the page of Fig. 11), to temporarily create sufficient space to apply the mechanism to the first lateral pair of beams 336. Once the mechanism is applied, then the first lateral pair of beams 336 may be deflected downwardly to apply a mechanism to the second lateral pair of beams 338 in a similar manner.

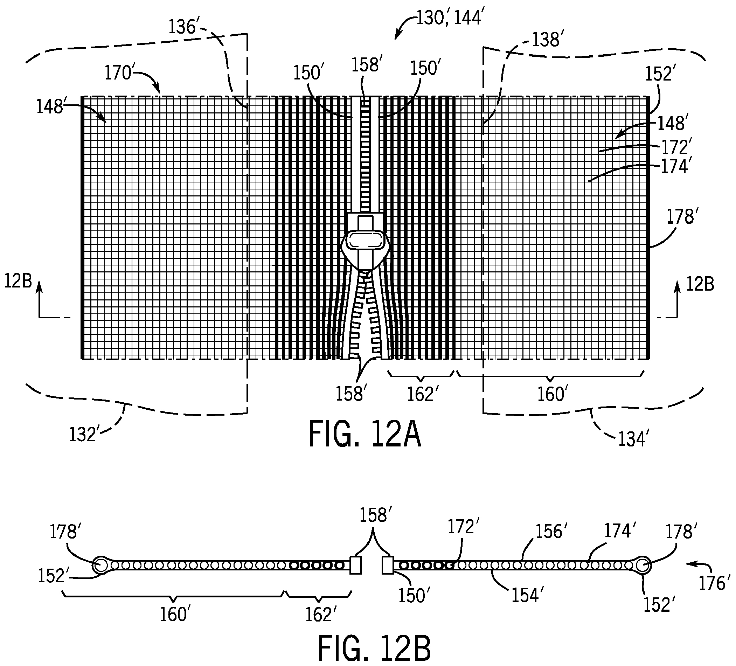

With reference to Figs. 12A-16B, an optional example of the zipper assembly 130' and mold components 300' are shown. The zipper assembly 130' and the mold components 300' may be the same as or similar to the structure and/or function described above for the zipper assembly 130 and mold assembly components 300 as defined above with respect to Figs. 1 to 11, with any differences in structure being described below. Throughout, only one zip member 144' and subcomponents may be described, with the understanding that the other zip member 146', may be similar to, the same as or symmetric and substantially identical unless otherwise noted. In this example, the primary zip member 144' of the zipper assembly 130' may define a region along the outer edge 152' having a thickness dimension extending along at least a portion of the length of the primary zip member 144' that is greater than the thickness dimension of the first portion 160' adjacent the outer edge 152'. In some examples the tape member 148' of the primary zip member 144' includes the increased thickness dimension along the outer edge 152'.

The increased thickness region along the outer edge 152', in one example, is a bead structure 176' positioned at or near the outer edge 152' of the first portion 160'. The bead structure 176' may extend along at least a portion of the length of the tape member 148'. The bead structure 176' may have a larger cross-sectional dimension than other areas of the first portion 160' adjacent the bead structure 176'. The bead structure 176' may be formed by one or more warp yarn or yarns 176', that each individually or collectively have a larger cross sectional dimension, such as for instance a cross sectional diameter greater than the other warp yarns 172' in the first portion 160'. In some examples, the bead structure 176' may be formed by a cord defining a warp yarn or positioned along the warp yarns 172' and defining the outer edge 152'. The bead 176' may also be defined by two or more warp yarns 172'. For example, the bead 176' may be formed by folding the first portion 160' to position a warp yarn 176' at the outer edge 152' in contact with an adjacent warp yarn 172' having an increased combined thickness (e.g. stacked or in vertical alignment). The cross section dimension in a direction normal to the extending length of the tape member is considered the "thickness" dimension. To accommodate the bead structure 176' formed on the first portion 160', the mold components 300' may define a channel 350' formed on the inner surface 310' of the mold cavity, such as on the mold core 326', to receive at least a portion of the bead structure 176' prior to the molding process. The channel 350' may be sized to have a volume greater than the bead structure 176', such that a portion of the bead structure 176' and a portion of the first portion 160' adjacent the bead structure 176' may be received in the channel 350'. The bead structure 176' may be entirely within the channel 350', and in one example is flush with the surface 310', and in other examples is below flush with the surface 310'.

The bead structure 176' positioned in the channel 350' during the injection molding of the shell helps direct the overinjected mold material to flow over the outer surface 156' of the tape member 148' to bond in a facial manner as described above with respect to the tape member 148. For example, the bead structure 176' may direct the mold material to flow toward and bond to the outer surface 156' of the tape member 148'. In some examples, the mold material flows to and bonds only with the outer surface 156'. The bead 176' positioned in the channel 350' may also be beneficial to reduce the occurrence of mold material flowing between the tape member 148' and the inner surface 310' of the mold core 326', which would result in mold material between the tape member 148' and the surface 310', as well as a bonding of the mold material with an inner surface 154' of the tape member 148'. Mold material bonding to the inner surface 154' and/or the inner surface 154' and the outer surface 156' of the tape member 148' may result in aesthetic or structural defects requiring the combined tape member 148' and respective shell 116' or 118' to be discarded. The bead structure 176' may also assist in locating a zipper loop 330' on the mold components 300'.

Referring to Figs. 12A and 12B, this optional tape member 148' may have a structure and/or function that is the same or similar to the tape member 148 as defined above with respect to Figs. 1 to 11. The tape member 148' includes a first portion 160' and a second portion 162 made by warp 172' and weft yarns 174' as described above with respect to Figs. 1-11. Zipper teeth 158' may extend along one opposing edge 150' of each tape member 148', such as the inner edge 150'. Zipper teeth 158' may include individual teeth elements (plastic or metal), or coil structures, and are herein referred to generally as "zipper teeth". The zipper teeth 158' may be visible or hidden. For example, the tape member 148' may include additional warp 172' or weft yarn 174' extending beyond the inner edge 150' and at least partially covering the zipper teeth 158'. The first and second primary zip members, 144' and 146' respectively, and their respective tape members 148' and zipper teeth 158' generally include the same or similar structural features and function. As shown in Fig. 12A, the zipper teeth 158' may releasably secure together, such as by a slider 159'. The zipper teeth 158' may be of a variety of sizes. For example, the zipper teeth 158' may each be between 2 and 9 mm wide. In one example, the zipper teeth 158' are 8 mm wide.

The zipper assembly 130' may have a width of approximately 30-40 mm. For example, each zip member 144' or 146' may have a width of approximately 15-20 mm from the zipper teeth 158' to the outer edge 152'. In one example, the zip member is approximately 18 mm wide.

The bead structure 176' may be a section of the first portion 160' of the tape member 148' that has a larger cross-sectional dimension than other portions of the first portion 160'. The bead structure 176' may be positioned along the outer edge 152' of the first portion 160'. The bead structure 176' may be formed by one or more warp yarn 178', or yarns, that each individually or collectively have a larger cross sectional dimension, such as for instance a cross sectional diameter, as compared to the other warp yarns 172' in the first portion 160'. In other examples, the bead structure 176' may have a larger dimension than the first portion 160' and/or second portion 162' of the tape member 148. In other examples, the bead structure 176' may have a larger thickness than the first portion 160' and/or second portion 162' of the tape member 148. In one example, the bead structure 176', when included in the woven tape member 148', may have a thickness of about 1.8 mm, and may have a width of approximately 3 mm. In comparison, the surrounding tape member 148' may have a thickness of approximately 0.6 mm in the region between the bead structure 176' and the teeth 158', which includes the first portion 160' and the second portion 162'.

In one example, the bead structure 176' defines an elongated region of the tape member 148'. It is appreciated that the larger-sized warp yarn 178', as well as the surrounding warp and weft yarns of the first portion 160' and/or the second portion 162', may have variety of thicknesses or widths and geometries (e.g. oval or circular profiles, rectangular profiles, irregular profiles, etc.). The bead structure 176' may be spaced from the zipper teeth 158'. For example, the bead structure 176' may extend along all or a portion the second or opposing edge 152', opposite the first edge 150'. Accordingly, as shown in FIG. 12B, the bead structure 176' may include a single larger-sized warp yarn 178' positioned as the outermost warp yarn in the woven tape member 148'.

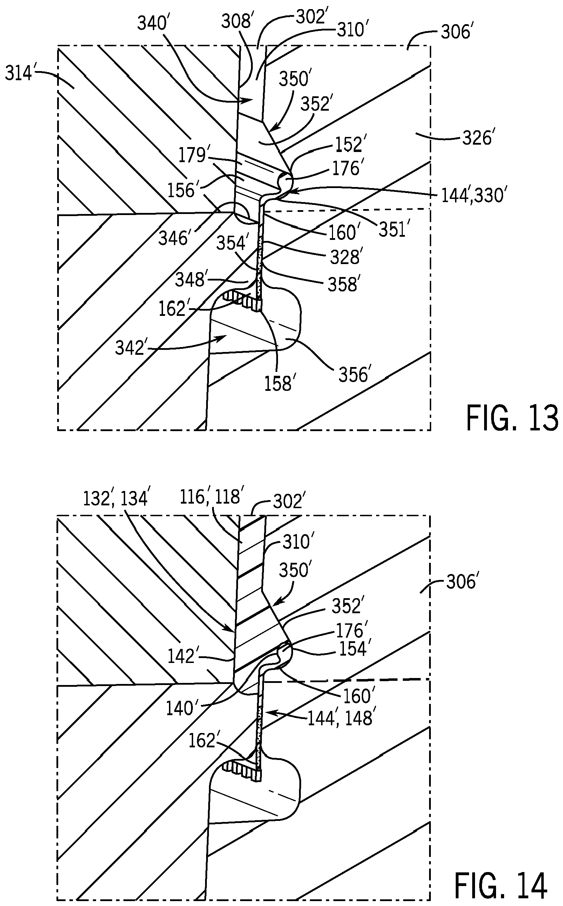

Figs. 13 and 14 show representative cross sections through the interior of the mold components 300' and the mold cavity 302'. The mold components 300' may be the same as or similar to those previously described, such as in Figs. 6A, 6B, and 7, with any differences described below. The primary zip member 144', and in one example the tape member 148', is positioned on the lower peripheral edge portion 328' of the mold core 326', and extends into and between both the first region 340' and second region 342'. The channel 350' is formed on the inner surface 310' of the mold cavity 302', on the mold core 326', where the mold material flows to form the peripheral rim portion 132', 134' of the respective luggage shell 116, 118. As with the examples described in Figs. 1-11, the first portion 160' of the tape member 148' of the primary zip member 144' is in-mould-bonded to the rim portions 132', 134' of the shell 116'.

As shown in Fig. 13, the inner surface 310' of the mold cavity 302' in the first region 340' may be defined by the outer surface 308' of the mold core 326'. As may be similarly described with reference to Figs. 5A - 5G, the primary zip member 144' may form a zipper loop 330" and may be positioned around the lower peripheral edge portion 328' of the mold core 326' prior to the joining of the upper mold parts 304' with the lower mold parts 306' to form the mold cavity 302'. In one example, the zipper loop 330" is stretched or expanded from its nominal length forming a nominal circumference (factoring in any overlap of the ends, if any) to a larger circumference, and thus is in tension, when positioned on the lower peripheral edge portion 328' of the mold core 326'.

Common with the examples provided above in Figs. 6A, 6B, and 7, and in reference to Figs. 13 and 14, the inner surface 310, 310' of the mold cavity 302, 302' may receive and engage the inner surface 154' of the primary zip member 144', 146' with the outer surface 156' of the primary zip member 144', 146' facing away from the surface 310'. The primary zip members 144' and 146', having a first portion 160' and a second portion 162', respectively. The first portion 160' defines an outer edge 152'. The surface 310' and the outer edge 152' of the first portion 160' are engaged under compression (due to the stretching of the zipper loop) such that the mold material, during injection molding, flows into engagement with the outer edge 152' and is diverted by the outer edge 152' to flow, in some examples entirely, over at least part of the outer surface 156'. In some examples, and preferably, no mold material flows between the inner surface 154' of the zip member 144' and the inner surface 310'.

Referring to Figs. 13 and 14, the surface 310' may define a channel 350' that receives the bead 176' and at least part of first portion 160' of the zipper tape member 148'. The surface 310' may include the lower peripheral edge 328' of the mold core 326'. The channel 350' may be formed on the mold core 326', and in one example may be formed around the lower peripheral edge 328' of the edge portion 328' of the mold core 326'. The channel 350' may have a variety of profiles. In one example, the channel 350' may be generally U-shaped or concave. In one example, the channel 350' may have a rounded bottom 351' with side walls 352' extending at different lengths, and/or at different angles, such as is shown, relative to the inner surface 310'. The zipper tape member 144', 146' may be at least partially received in the channel 350' with the bead structure 176' positioned in the rounded bottom 351', or adjacent the rounded bottom and in contact with a side wall 352'. The sidewall 352' may define an interior surface of the channel 350' in contact with the tape member 144', 146'. The bead structure 176' may be partially received in or entire received in the channel 350'. In one example, such as in Fig. 13, the bead structure 176' is positioned on the longer sidewall 352' of the channel 350', closer to the rounded bottom 351' than the end of the side wall 352'. The inner surface 154' of the tape member 148' extends along the shorter side wall 352' and the curved bottom 351' of the channel 350'. The bead structure 176' is positioned in the channel 350' and is, in one example, flush with or below flush with, the surface 310' of the mold core 326' adjacent to the channel 350'. In some examples, the bead structure 176' may be slightly above flush with the surface 310' of the mold core 326' adjacent the channel 350' and still provide the benefit described herein.

In some examples, the tape member 144' may be folded or creased to assist in placing the bead structure 176' in the channel 350'. For example, the tape member 144' may be arranged to extend towards the longer sidewall 352' when the bead structure 176' is inserted into the channel 350'. The fold may be at a location adjacent, but spaced from the bead structure 176'. For example, the fold may be located approximately 5mm towards the inner edge 150' from the bead structure 176'. The fold or crease may be defined by the weaving pattern of the warp 172' or weft yarns 174'. In some examples, an adhesive or additional material may be placed on the tape member 144' to form the crease or fold.

The second region 342' of the mold cavity 302' is defined below the concave first region 344' and includes the protrusion 348' below the shoulder 346' and a storage cavity 356'. The face 354' of the protrusion 348' is spaced away from the outer 308' of the mold core 326' to form a gap 358'. The gap 358' may be similar to the gap 358 as previously described and may extend between the first region 340' and the storage cavity 356' of the second region 342'. The zipper tape member 148' extends through the gap 358' and into the storage cavity 356', with the face 354' of the shoulder 346' closely spaced adjacent to, or in another example engaging, the outer surface 156' of the zipper tape member 148'. The zipper teeth 158' are positioned within the storage cavity 356'. The mold material does not flow into the gap 358', and thus because the second portion 162' of the zipper tape member 148' extends through the gap 358', and is engaged with the face 354' of the shoulder 346', the second portion 162' is not overlaid with mold material.

As shown in FIG. 13, the bead structure 176' may be in tension, and act in compression against the inner surface profile 310' of the mold core 326'. The larger sized warp yarn 178' may be more resistant than the rest of the first and second zipper portions 160', 162', to the stretching required of the zipper loop 330" to fit around the periphery of the mold core 326' when being positioned thereon. As a result, the bead structure 176' and/or the larger sized warp yarn 178' may apply a larger compression force along an outer edge 152' of the tape member 148' to the mold core 326' when it is positioned in the channel 350'. The enhanced tension in the outer edge 152' of the tape member 148', and/or the resulting focused compression against the surface 310' of the mold core 326', helps the outer edge 152' of the tape member 148' maintain engagement during the injection molding process.

With reference to Fig. 14, in one example, when mold material, during injection molding, flows into channel 350' it impacts or engages with the outer edge 152' and is diverted out of the channel 350' to flow over at least part of the outer surface 156' of the zipper member 144', 146'. When mold material flows into the mold cavity 302', and enters the region of the channel 350', the injection mold material flows along the long side wall 352' of the channel 350' and contacts the surface of the outer edge 152', in this example formed by the bead structure 176'. The bead structure 176', because of the higher level of tension and higher compressive force against the mold core 326', acts to inhibit the injection mold material from flowing past the bead structure 176' and between the tape member 148' and the surface 310' of the mold core 326'. The bead structure 176' instead directs the injection molded material to flow over the outer surface 156' of the first portion 160' of the zipper tape member 148'. By directing the flow of the injection mold material, the bead 176' may assist in forming the in-mould-bond between the shell 116' and the tape member 148' to be between the outer surface 156' of the tape member 148' and the inner surface 140' of the rim 132'. The bead 176' of the tape member 148' may act as a barrier to the shell material during molding and prevent the inside surface 154' of the tape member 148' from being in-mould-bonded to the rim portion 132'. For example, the bead structure 176' may act as a dam that impedes the flow of the injection molded material along the inner surface profile 310' of the mold core 326', and directs the flow of injection mold material over the outer surface 156' of the tape member 148'. The bead 176' may define a boundary between the outer surface 156' of the tape member 148' and the inner surface 140' of the rim 132' and/or shell 116'.

The in-mould-bond between the inner surface 140' of the rim portion 132' and the outer surface 156' of the zipper tape member 148' is created by the mold material overmolding onto and engaging with the outer surface 156' of first portion 160' of the zipper tape member 148'. As described above with respect to at least Fig. 2A and 7, the inner surface 140' of the shell 116', 118' may bond with all of the first portion 160' of the tape member 148', or only part of the first portion 160' of the tape member 148'. In another example, the inner surface 154' of the tape member 148' may be in-mould-bonded to the outside surface 142' of the respective rim portion 132', 134' of the luggage shell 116', 118'. Once set, the injection molding material may define the shell 116', including the rim portion 132', and may be in-mould bonded with the tape member 148'. The shape of the rim portion 132' and the bonded tape member 148' may be determined by the shape of the mold 300', as discussed in greater detail below. The bead structure 176' may define a boundary between the outer surface 156' of first portion 160' that is in-mould bonded with the rim 132' and the inner surface 154' of the first portion 160' that is a non-bonded surface of the first portion 160'.

An accessory zipper assembly 180' may attached to the shell 116', 118' of luggage case 102', in conjunction with the primary zip member 144', 146', during the injection molding process used to form the shell 116', 118'. Accessory zipper assembly 180' may be similar to or the same as accessory zipper assembly 180 as discussed above and as shown in FIGS. 4A - 4E and FIG. 6B. For example, the accessory zipper assembly 180' may include zipper teeth 190' along an edge. The zipper teeth 190' may be comparatively smaller or narrower than the zipper teeth 158'. For example, the zipper teeth 190' may be approximately 3 mm wide and the zipper teeth 158' may be 8 mm wide.

Examples of the accessory zipper assembly 180' may include a liner zipper assembly 182' for attaching a liner to the interior of a shell of the luggage case, or an integral expansion zipper assembly, as may be described previously with reference to Fig. 4B, to allow expansion between the shells of the luggage case. In some examples, the accessory zipper assembly 180' may define or include an accessory bead along or adjacent an outer edge of the accessory zipper assembly 180'.

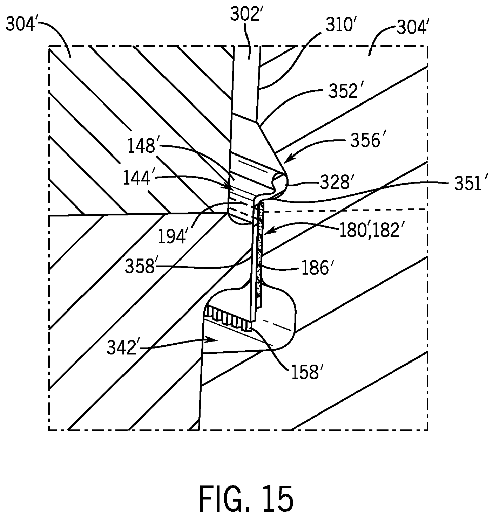

In one example, the zipper loop 330' that is positioned in the mold cavity 302' may include the accessory zipper 180'. Fig. 15 shows an accessory zipper assembly 180', which may be a liner zipper assembly 182', attached to the primary zipper assembly 144'. In particular, the liner zipper assembly 182' may be attached to the first primary zip member 144' by stitching 194' to the first liner tape member 186' to the first tape member 148'. In some examples, the first liner tape member 186' may be attached to the first portion 160' or the second portion 162' of tape member 148'. In some examples, the liner tape member 186' may extend from the bead structure 176' to the second portion 162'. The accessory zipper assembly 180' or the liner zipper assembly 182' may have a length less than or greater than a length of the primary zip member 144'. The liner zipper assembly 182' may have a length less than the primary zip member 144' to prevent a liner from interfering with operation of the zipper assembly 130'.

The accessory zipper assembly 180' may include material similar to or the same as the primary zipper assembly 144'. For example, the accessory zip member 180' may include one or both the materials of the first portion 160' or the second portion 162'. In some examples, the accessory zip member 180' may only extend along one of the first portion 160' or the second portion 162' and include only the material of that portion.

This example is described with reference to a single shell 116' of the luggage case 102', but may be applicable in the same or similar manner to the other shell 118' of the luggage case such that either or both shells of the luggage case may have accessory zipper assemblies 180'. In some examples the accessory zipper assemblies of Figs. 4B (expansion zipper assembly 184) and 4E (cover layer 280) may also be used.

The mold components 304' may be modified to allow a primary zip member 144', 146' along with an accessory zipper assembly 180' or cover layer, or both, to be bonded to the inner surface 140' of the respective rim portion 132', 134' of the respective luggage shell 116', 118'. For example, Fig. 15 the liner zipper assembly 182' positioned about the lower peripheral edge portion 328' of the mold core 326' prior to the injection molding process.

The channel 350' formed in the outer surface of the lower peripheral edge portion 328' of the mold core 326' or the gap 358' may have a depth to accommodate the thickness of both the zipper tape member 148' of the primary zip member 144' and the liner tape member 186' of the accessory zipper assembly 180'. This helps maintain the outer surface of the tape member 148' against the outer surface of the mold core 326', which helps insure the mold material only engages the outer surface 156' of the tape member 148' to in-mould-bond with the inner surface 140' of the rim portion 132' of the respective shell 116', 118'. In some examples, the liner zipper assembly 182' may be positioned in the channel 350' or the gap 358' but below the rounded bottom 351'. In some examples, the liner zipper assembly 182' may extend along the rounded bottom 351', but below the walls 352'. The zipper teeth 158' of both the primary zip member 144' and the zipper teeth 190' accessory zipper assembly 180' may be positioned in the storage cavity 356' during the injection molding process. Similarly, the cavity 356' may receive the portions of the integrated expansion zipper assembly (such as discussed with reference to Fig. 4B) or portions of the cover if applied to the tape member 148' (such as discussed with reference to Fig. 4E).

When the first primary zip member 144' is bonded to the rim portion 132' during the injection molding of the first shell 116', the liner tape member 186' of the zipper liner assembly 182' may in turn also attach to the rim portion 132'. For example, the stitching 194' may retain the liner assembly 182' to the primary zip member 144'. This may simplify the assembly of the zipper liner assembly 182' on the luggage shell 116' and eliminate or reduce the labor and expense associated with separately attaching the liner zip assembly 182' to the luggage shell 116'. In some examples, all or part of an accessory zipper 180' may be attached to the primary zip member 144', 146' so that both the accessory zipper assembly 180' and the primary zip member 144', 146' are bonded to the respective shell 116', 118' when the shell is formed by injection molding.

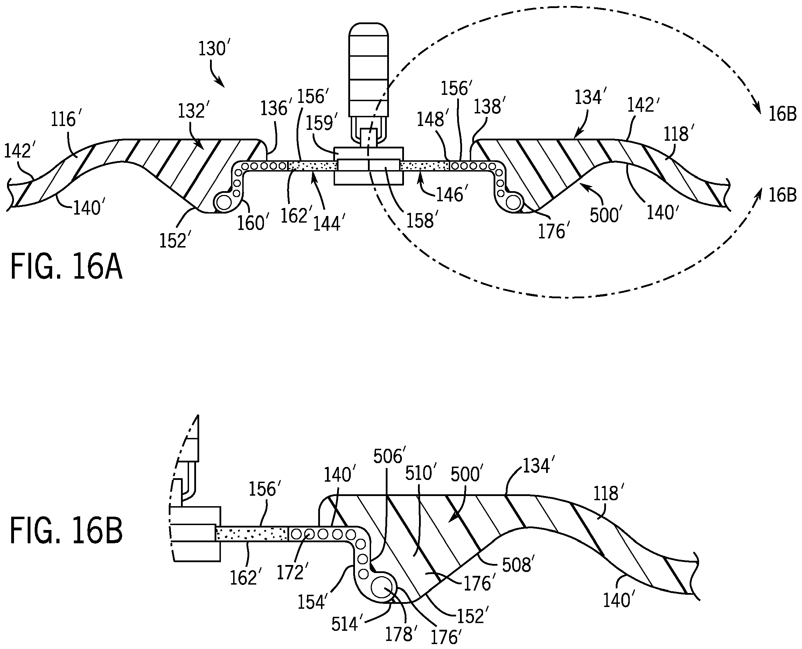

Figs. 16A shows a zipper assembly 130' including the two zip members 144', 146', each zip member including a tape members 148', bonded with respective shells 116', 118'. Fig. 16B is an enlarged view of one of the two tape members 148'. The structure of both tape members may be the same or similar. With reference to one tape member 148', the outer surface 156' of the tape member 148' may be in-mould-bonded to the inner, or inside, surface 140' of the rim portion 134', where the rim portion 134' overlays the tape member 148'. The rim portion 132' of the first shell 116' and the rim portion 134' of the second shell 118' may be secured together by the primary zipper assembly 130' attached during the injection molding of the first and second shells 116', 118'. Each rim portion 132', 134' may define a peripheral edge 136', 138' and opposing inside (or inner) 140' and outside (or outer) 142' surfaces. The thickness of the shell 116', 118' between the inner surface 140' and the outer surface 142' may define the nominal thickness of the shell 116', 118'.

The mold material that flows into the mold cavity 302' and the channel 350' (referring to Figs .13 and 14) forms a ridge 500' extending away from the inner surface of the rim 132', 134'. The ridge 500' may be spaced inwardly from the peripheral edge of the rim 136', 138'. With reference to FIG. 16B, the ridge 500 may extend at least partially along the length of the rim 132', 134' corresponding to the extension of the channel 350' around the inner surface profile 310' of the mold core 326'. The cross sectional shape of the ridge 500' is defined by the shape of the channel 350', and in one example may be a cast, impression, reverse feature, of the channel 350'. The ridge 500', as shown in Figs. 15A-B, may define a pair of walls 506', 508' that meet and form a groove 510' in the ridge that receives the bead 176'. One wall 508' may be a longer wall, such as for example an angled side wall 508', directed toward the interior volume of the shell. The angled sidewall 508' may be linear or curved, depending on the corresponding portion of the channel 350' against which it was formed. The angled wall 508' may not be covered by the zip tape 148'. The other wall 506' may be a shorter wall that is at a higher angle relative to the nominal inner surface 140' of the shell 116'. In some examples, the shorter wall 506' may extend at an angle of between 80 degrees to 90 degrees relative to the nominal surface 140' of the shell 116'. The shorter wall 506' is covered by the zip tape 148', which is bonded thereto through the injection molding process noted here.

The zip member 144', 146', such as for example the tape member 148', may be bonded with the inner surface 140' of the rim 132', 134' of the shell 116', 118', and in one example may overlap and be attached to at least part of the ridge 500', for example by mold bonding. In one example, the first portion 160' may overlap with and be bonded to at least part of the ridge 500'. The tape member 148' may generally overlap with all or part of the shorter wall 506' such that the outer edge 152' is positioned on the ridge 500', such as on wall 506', near or within the groove 510', or on wall 508'. In some examples, the overlap may extend the entirety of wall 506', with the bead 176' of the tape member 148' being positioned at an apex of the ridge 500'. In some examples, the bead 176' is received in the groove 510' formed at or near (such as in one example adjacent to but below) the apex of the ridge. The bead 176' may be set within the groove 510' along all or part of the length of the groove 510'. The bead 176' may be set within the groove 510' along all or part of the length of the bead 176'. The inner surface 154' of the tape member 148' along the bead 176' and/or the larger warp yarn 178' may define a surface substantially coextensive with the outer surface of the rim 132', 134'. In one example the larger warp yarn 178' may define a surface substantially parallel to the outer surface of the rim 132'. The inner surface 154', in these examples, may form a flat or generally planar bottom portion 514, which provides a smooth transition over the ridge 500' along the interior of the luggage case.

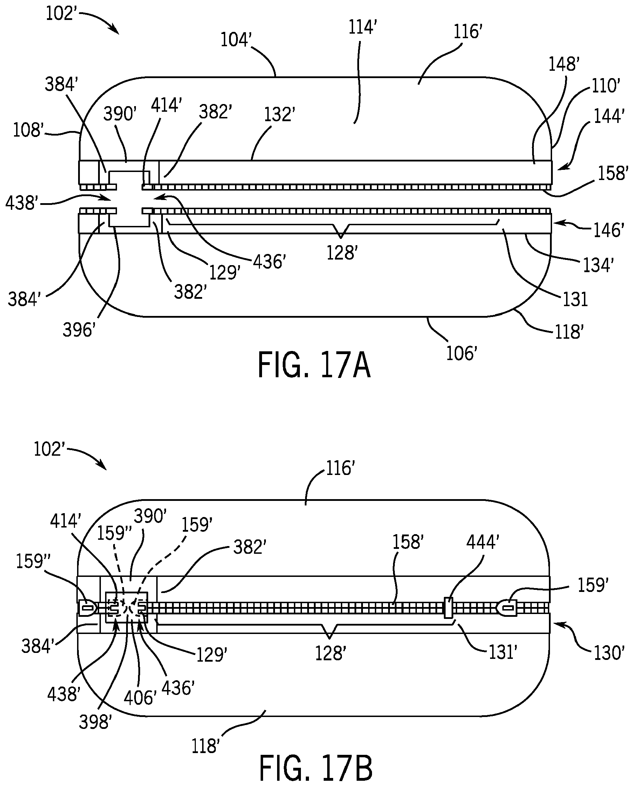

Referring to Fig. 17A, an example of the first 116' and second shells 118' of the luggage case 102' after being injection molded and bonded to respective zip members 144' and 146' is shown, as may be described above, such as with respect to at least Figs. 5A-5G and 9-11. As shown in Fig. 17A, the respective rims 132', 134' of the shells 116', 118' may be aligned prior to coupling the shells 116', 118'.

The luggage case 102' may include the first zip member 144' attached to the first shell 116' and the second zip member 146' attached to the second shell 118'. The zip members 144', 146' may extend around the periphery or along the corresponding rims 132', 134' of the shells 116', 118'. As discussed above, the opposing ends 382', 384' of the first and second primary zip members 144', 146' may be optionally attached together by a joining member 390' to form the matched primary zipper loop 380, with reference to Figs. 8-11, or the closure assembly 130'. Alternatively, the respective opposing ends 382', 384' of each of the primary first and second zip members 144', 146' may be joined directly together to form individual zipper loops.

Each tape member 148' of the zip members 144', 146' may define a notch 396' as described above. The notches 396' may be locations at which the teeth 158' are removed, and in some examples, some of the width of the respective tape member 148' is removed. When configured together as a zipper assembly 130', as shown, the notches 396' of each zip member 144', 146' form a cut-out area 398'. The joining member 390' may form a cut-out 406' that is similar or the same as the cut-out area 398' in the respective zip members 144', 146'. The cut out area 398' may provide a space for mounting a mechanism, such as one or more zipper sliders 159', 159" or zipper end clips (shown in FIG. 11), or interference feature 444' (e.g. stables, fasteners, or adhesives) onto the engaged zipper teeth 158'.

The zip members 144', 146' or the joining member 390' may define beams or insertion pins 414'. The insertion pins 414' may receive mechanisms, such as zipper sliders 159', 159" to selectively engage or release the zipper teeth 158', or clips to secure the zip members 144', 146' together.

With continued reference to FIG. 17A, the luggage case 102' may have a front panel 104', rear panel 106', a top panel 108', a bottom panel 110', a side panels such as a right panel 114'. The luggage case 102' may include a hinge portion 128' formed by the engaged connection mechanism 130' formed by the zip members 144, 146. The hinge portion 128' may be a length of the closure or zipper assembly 130' where the zip members 144', 146' are secured together. The hinge portion 128' may extend along, for example, at least a portion of one long side of the respective luggage shells 116', 118'. In the example shown, the hinge portion 128' is formed along right panel 114'. The hinge portion 128' may extend along substantially the entire length of the long side, or may extend one-half (50%), less than one-half (e.g. <50%), or more than one-half (e.g. > 50%) of the length of the long side. In one example the hinge portion 128' may be centered on the long side. The shells 116', 118' may rotate open and closed about the hinge portion 128', to access the interior volume of the luggage case 102'. The zip members 144', 146' may be arranged relative to the respective shell 116', 118' so that the cutout 398' (and cut-out 406', where the optional joining member 390' is utilized) is positioned adjacent one end of the hinge portion 128'. For example, the zip members 144', 146' may be positioned on the shells 116', 118' with the cutout 398' (and the cutout 406' in the optional joining member 390') positioned at an end 129' of the hinge portion 128' adjacent the top panel 108' of the luggage case 102'. Alternatively, the cutout 398' (and the cutout 406' in the optional joining member 390') may be positioned at an end 131' of the hinge portion 128' adjacent the bottom panel 110' of the luggage case 102'. The benefits of this arrangement include that the mounting of the zipper sliders 159', 159" and defining the hinge portion 128 is simplified, and that the hinge portion 128' is formed with a continuously connected zipper 130', which assists in a more robust hinge structure. Still alternatively, the cutout 398' (and the cutout 406 in the optional joining member 390') may be positioned along the hinge portion 128' between the opposite ends 129', 131' of the hinge portion 128'.

With reference to FIG. 17B, the shells 116', 118' may be arranged to allow corresponding zipper teeth 158' of the zip members 144', 146' to receive one or more zipper sliders 159', 159" to be mounted onto the zipper members 144', 146' to engage and/or disengage the zipper teeth 158'. For example, a first zipper slider 159' (shown in dash) may be positioned in the cutout 398' and received onto the zipper teeth 158' of the zip members 144', 146' at the first end 382'. The first zipper slider 159' may be slid or moved along the length of the zipper tapes 144', 146' to engage the respective zipper teeth 158'. For example, the zipper slider 159' may pass along and through the hinge portion 128' to secure the corresponding zipper teeth 158' together. For example, the zipper slider 159' may be moved to the opposite or distal end 131' of the hinge portion 128' relative to the cutout 398' or end 129'. After moving the first zipper slider 159' through the hinge portion 128', the first ends 382' of the zipper tapes 144', 146' may be secured together to prevent separation of the zipper teeth 158'. This may be done by an end clip or other device. In some examples, after moving the first zipper slider 159' through the hinge portion 128', the interference mechanism 444', such as a staple, fastener, or other securement device 444' may be attached to zip members 144', 146' at the distal end 131' of the hinge portion 128' to interfere with and/or prevent the zipper slider 159' from moving back along the hinge portion 128' and disengaging the corresponding zipper teeth 158'. The staple 444' may also further assist in maintaining the engagement of the zipper teeth 158' through the hinge portion 128' while functioning as the hinge for the luggage case 102'.

With continued reference to FIG. 17B, a second zipper slider 159" may be placed onto the zip members 144', 146' at the corresponding second ends 384'. The zipper slider 159" may be received by the second pair 438' of insertions pins 414' at the cutout 398', as indicated with dashes in FIG. 17B. The second zipper slider 159" may then be moved along the zipper teeth 158' to engage and/or disengage the corresponding zipper teeth 158' in a direction opposite of the hinge portion 128'. After the zipper slider 159" is placed on the zip members 144', 146' an end clip (not shown) may similarly secure the corresponding second ends 384' together to prevent separation of the corresponding zipper teeth 158'.

In some examples, the cutout area 398' (and the cutout 406' in the optional joining member 390') may be covered or concealed by one or more features to prevent or limit access to the internal volume of the luggage case 102'. For example, the cutout 398' may be covered by one or more end clips positioned at either end 382', 384' of the zip members 144', 146' and sized and shaped to fill the cutout 398'. In some examples, a fabric, such as a wear resistance material, may be placed at or over the cutout 398'. In some examples, a lid or flexible plate may be attached to the zip members 144', 146' or the shells 114', 116' to cover the cutout area 398'.

In some examples, the hinge portion 128' may be covered, concealed, or supported by an external feature. For example, the hinge portion 128' may be covered by a sheath feature. The sheath feature may be a fabric, plastic, leather, or other wear resistant or durable material. The sheath feature may extend between the shells 114', 116' to cover or overlap the hinge portion 128'. In some examples, the sheath feature may have an aesthetic benefit of more clearly conveying the location of the hinge portion 128' or meeting the visual expectations of a hinge to a consumer.

All relative and directional references (including: upper, lower, upward, downward, left, right, leftward, rightward, top, bottom, side, above, below, front, middle, back, vertical, horizontal, and so forth) are given by way of example to aid the reader's understanding of the particular examples described herein. They should not be read to be requirements or limitations, particularly as to the position, orientation, or use unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

It is possible to express at least some of the novel and inventive features of the present disclosure by reference to one or more of the following numbered clauses.

Those skilled in the art will appreciate that the presently disclosed examples teach by way of example and not by limitation. Therefore, the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall there between.

## Claims

1. An injection molded shell (116, 118, 116', 118') for a luggage case (102, 102') comprising:
an injection molded shell (116, 118, 116', 118') defining a rim portion (132, 134, 132', 134', 145) having inside (140, 140') and outside (142, 142') surfaces;
an elongated zip member (130, 144, 146, 130', 144', 146') including a tape member (148, 148') having opposing first (154, 154') and second (156, 156') surfaces, and opposing inner (150, 150') and outer (152, 152') edges defining a width, with teeth (158, 158') positioned along the inner edge (150, 150'), and defining a length; and
wherein the opposing second surface (156, 156') of at least part of a first portion (160, 160') of the tape member (148, 148') is in-mould-bonded to the inside surface (140, 140') of the rim portion (132, 134, 132', 134', 145).

2. The injection molded shell (116, 118, 116', 118') for the luggage case (102, 102') as defined in claim 1, wherein:
the first surface (154, 154') of the tape member (148, 148') is unaffixed to the rim portion (132, 134, 132', 134', 145) and/or the tape member (148, 148') is in-mould-bonded to the inside surface (140, 151, 140') of the rim portion (132, 134, 132', 134', 145), and/or the in-mould-bonding is substantially continuous along a portion of the length of the tape member (148, 148').

3. The injection molded shell (116, 118, 116', 118') for the luggage case (102, 102') as defined in any of claims 1 or 2, wherein:
the injection molded shell (116, 118, 116', 118') is made of a plastic mold material;
the tape member (148, 148') includes:
the first portion (160, 160') adjacent to the outer edge (152, 152') of the tape member (148, 148'), and
a second portion (162, 162'); and
the first portion (160, 160') of the tape member (148, 148') is predominately made of a first material that is compatible with and in-mould-bonds to the plastic mold material.

4. The injection molded shell (116, 118, 116', 118') for the luggage case (102, 102') as defined in any of claims 1 to 3, wherein;
the tape member (148, 148') is woven and includes warp yarns (172, 172') extending along the length of the tape member (148, 148') and weft yarns (174, 174') extending across a width of the tape member (148, 148'); and
the first portion (160, 160') of the tape member (148, 148') includes the weft yarns (174, 174'), the first warp yarns (172, 172'), and the first material.

5. The injection molded shell (116, 118, 116', 118') for the luggage case (102, 102') as defined in any of claims 1 to 4, wherein:
the outer edge (152, 152') defines a first thickness dimension along at least a portion of the tape member (148, 148'), the first thickness dimension being greater than a thickness dimension of the first portion (160, 160') adjacent the outer edge (152, 152').

6. The injection molded shell (116, 118, 116', 118') for the luggage case (102, 102') as defined in claim 5, wherein:
the outer edge (152, 152') is defined by a bead (176') defining the first thickness dimension.

7. The injection molded shell (116, 118, 116', 118') for the luggage case (102, 102') as defined in claim 6, wherein;
the bead (176') is defined by at least one first warp yarn (172, 172', 178') having a diameter greater than others of the first warp yarns (172, 172').

8. The injection molded shell (116, 118, 116', 118') for the luggage case (102, 102') as defined in any of claims 6 or 7, wherein:
the bead (176') is predominately made of a same material as the injection molded shell (116, 118, 116', 118').

9. The injection molded shell (116, 118, 116', 118') for the luggage case (102, 102') as defined in any of claims 6 to 8, wherein:
the bead (176') is an outer-most warp yarn (172, 172', 178') of the first warp yarns (172, 172').

10. The injection molded shell (116, 118, 116', 118') for the luggage case (102, 102') as defined in any of claims 6 to 9, wherein:
the bead (176') defines a boundary between the in-mould bonded outer surface (156, 156') of the first portion (160, 160') and the inner surface (154, 154') of the first portion (160, 160').

11. The injection molded shell (116, 118, 116', 118') for the luggage case (102, 102') as defined in any of claims 1 to 10, wherein:
the outer edge (152, 152') of the tape member (148, 148') extends along the inside surface (140, 151, 140') of the rim portion (132, 134, 132', 134', 145).

12. The injection molded shell (116, 118, 116', 118') for the luggage case (102, 102') as defined in any of claims 1 to 11 wherein:
the injection molded shell (116, 118, 116', 118') is formed in a mold (300, 300') comprising:
a mold cavity (302, 302') defining an inner mold surface (310, 310'), the inner mold surface (310, 310') engaging the first surface (154, 154') of the tape member (148, 144'), and defining an outer mold surface (308, 308'), the outer mold surface (308, 308') engaging the second surface (156, 156') of the tape member (148, 148'); and
the inner mold surface (310, 310') and the outer edge (152, 152') of the first portion (160, 160') arranged for mold material to flow and contact the outer edge (152, 152'), the outer edge (152, 152') diverting the mold material over the second surface (156, 156') of the tape member (148, 148').

13. The injection molded shell (116, 118, 116', 118') for the luggage case (102, 102') as defined in claim 12, wherein:
a channel (350, 350') is formed in the inner mold surface (310, 310');
at least part of the outer edge (152, 152') of the first portion (160, 160') is received in the channel (350, 350'); and
upon injection molding, the mold material flows into the channel (350, 350') to engage the outer edge (152, 152') and is diverted over the second surface (156, 156') of the tape member (144, 144').

14. The injection molded shell (116, 118, 116', 118') for the luggage case (102, 102') as defined in claim 13, wherein:
the channel (350, 350') is concave, and
the outer edge (152, 152') of the tape member (148, 148') is positioned against an interior surface (352') of the channel (350, 350') prior to injection molding.

15. The injection molded shell (116, 118, 116', 118') for the luggage case (102, 102') as defined in any of claim 1 to 14, wherein:
the injection molded shell (116, 118, 116', 118') includes:
a first long side (108, 110, 112, 114, 108', 110', 114'), and
the elongated zip member (130, 144, 146, 130', 144', 146') extends along the first long side (108, 110, 112, 114, 108', 110', 114'), the elongated zip member (130, 144, 146, 130', 144', 146') defining a first cutout (396, 398, 406, 396', 398', 406') positioned on the first long side (130, 144, 146, 130', 144', 146').
